# EUROPEAN PATENT SPECIFICATION

(11) **EP 1 636 305 B1**
(45) Date of publication and mention of the grant of the patent: **14.01.2009**
(21) Application number: 04752464.0
(22) Date of filing: 18.05.2004
(51) Int. Cl.: C08K 5/098, C08K 5/01, B65D 81/26, B32B 27/18, B65D 1/02

(54) **OXYGEN BARRIER FORMULATIONS**
SAUERSTOFFBARRIEREFORMULIERUNGEN
FORMULATIONS BARRIERE A L'OXYGENE

(30) Priority: 23.05.2003 US 473024 P
(43) Date of publication of application: 22.03.2006
(73) Proprietor: Graham Packaging PET Technologies Inc., Toledo, OH 43666 (US)
(72) Inventor: BOURGEOIS, Philip, D., Perrysburg, OH 43551 (US); FARGHER, James, M., Dataw Island, SC 29920 (US)
(74) Representative: Jenkins, Peter David
(86) International application number: PCT/US2004/015451
(87) International publication number: WO 2004/106426

(56) References cited:
- EP-A- 1 253 171
- WO-A-98/06779
- US-A- 4 041 005
- US-A- 5 350 622
- US-A- 5 700 554
- US-B1- 6 323 288
- DATABASE WPI Section Ch, Week 199314 Derwent Publications Ltd., London, GB; Class A14, AN 1993-112866 XP002296750 -& JP 05 051508 A (MONSANTO KASEI CO) 2 March 1993 (1993-03-02)

## Description

### BACKGROUND

Polymeric materials increasingly compete with conventional materials, such as glass and metal, in packaging applications. The use of polymeric materials can provide distinct advantages over glass and metal, including, reduced weight and cost, increased durability, and greater variability in packaging design. However, many polymers are more permeable to substances such as oxygen (O₂), carbon dioxide (CO₂), and water (H₂O) than conventional materials. These and other agents that permeate the polymeric packaging can deteriorate the quality of the contents of the package. Historically, oxygen has been a difficult substance to exclude from the contents of polymer packaging, due at least in part to its small physical size.

Oxygen barriers may include one or more agents, which may be polymers or may be low molecular weight additives. Polymers that are capable of acting as agents are typically expensive and are often combined with lower cost commodity polymers to form the polymer packaging, either by blending the different polymers or by forming layered structures of the polymers. The manufacture of packaging containing a polymeric agent is often complex and difficult, further adding to the cost of the packaging. Incorporation of low molecular weight additives as agents into polymers presents its own challenges. These additives tend to volatilize at the thermal processing conditions typically employed in the manufacture of plastics packaging.

US-A-5700554 discloses packaging articles suitable for scavenging oxygen including an ethylenically unsaturated hydrocarbon polymer, and a transition metal salt.

US-A-5350622 discloses a multilayer structure for a packaging for scavenging oxygen including an ethylenically unsaturated hydrocarbon, and a transition metal catalyst.

### BRIEF SUMMARY

In one aspect of the invention, there is an oxygen barrier composition, comprising a polymer, a metal, and a compound comprising structure (II): 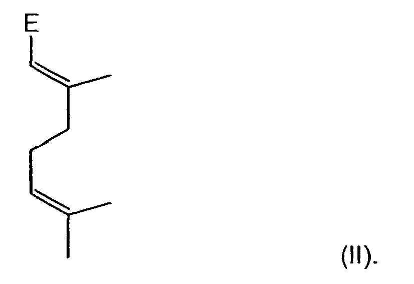 The moiety -E is selected from the group consisting of -C(=O)H, -CH₂R¹, and -CHR¹R²; wherein R¹ is -O-R³-R⁴ or -O-R⁴, such that R¹ comprises at least 2 carbon atoms and does not contain a carbonyl group, and R³ and R⁴ are independently selected from the group consisting of alkyl, alkenyl, alkynyl, heteroalkyl, aryl and heterocyclic; R² is -O-R⁵-R⁶ or -O-R⁶ , such that R² comprises at least 2 carbon atoms and does not contain a carbonyl group, and R⁵ and R⁶ are independently selected from the group consisting of alkyl, alkenyl, alkynyl, heteroalkyl, aryl and heterocyclic; or R¹ and R², together with the atoms to which they are bonded, form a ring comprising from 5 to 20 ring atoms.

In another aspect of the invention, there is a multi-phase composition, comprising a first phase comprising a first polymer; and a second phase, comprising a second polymer, a metal, and a compound comprising structure (I) 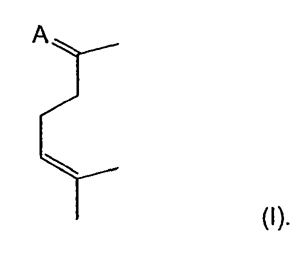 The moiety =A is selected from the group consisting of an alkenyl group of from 3 to 20 carbon atoms, a cycloalkenyl group of from 5 to 20 carbon atoms, and a group comprising the structure =CH-E. The moiety-E is selected from the group consisting of -CH₂OH, -CH(OH)₂, -C(=O)H, -CH₂R¹ and -CHR¹R² ; wherein R¹ is -O-R³-R⁴ or -O-R⁴, where R³ and R⁴ do not contain a carbonyl group and are independently selected from the group consisting of alkyl, alkenyl, alkynyl, heteroalkyl, aryl and heterocyclic; R² is -O-R⁵-R⁶ or -O-R⁶, where R⁵ and R⁶ do not contain a carbonyl group and are independently selected from the group consisting of alkyl, alkenyl, alkynyl, heteroalkyl, aryl and heterocyclic; or R¹ and R², together with the atoms to which they are bonded, form a ring comprising from 5 to 20 ring atoms.

In yet another aspect of the invention, there is a method of reducing the oxygen content of a substance, comprising sealing the substance in a package, the package comprising a polymer, a metal, and a compound comprising structure (II) 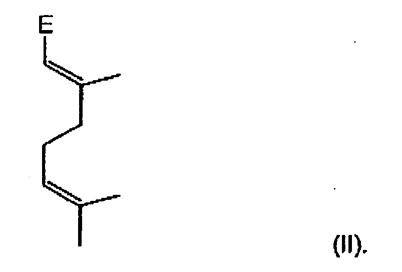 The moiety -E is selected from the group consisting of -C(=O)H, -CH₂R¹, and -CHR¹R² wherein R¹ is -O-R³-R⁴ or -O-R⁴, such that R¹ comprises at least 2 carbon atoms and does not contain a carbonyl group, and R³ and R⁴ are independently selected from the group consisting of alkyl, alkenyl, alkynyl, heteroalkyl, aryl and heterocyclic; R² is -O-R⁵-R⁶ or -O-R⁶, such that R² comprises at least 2 carbon atoms and does not contain a carbonyl group, and R⁵ and R⁶ are independently selected from the group consisting of alkyl, alkenyl, alkynyl, heteroalkyl, aryl and heterocyclic; or R¹ and R², together with the atoms to which they are bonded, form a ring comprising from 5 to 20 ring atoms.

### Definitions

The term "active oxygen barrier" refers to a material having the ability to consume oxygen through chemical and/or physical means. The "oxygen barrier activity" of a substance refers to the level of oxygen consumption of a material under a given set of circumstances. An "active composition" refers to a substance which can be used as an active oxygen barrier material. A "barrier material" is any material that exhibits a reduced rate of permeation for a particular substance, such as oxygen or carbon dioxide, in comparison to another material.

The term "alkyl" (or alkyl- or alk-) refers to a substituted or unsubstituted, straight, branched or cyclic hydrocarbon chain that preferably contains from 1 to 20 carbon atoms. Alkyl groups include, for example, methyl, ethyl, propyl, isopropyl, cyclopropyl, butyl, iso-butyl, tert-butyl, sec-butyl, cyclobutyl, pentyl, cyclopentyl, hexyl, and cyclohexyl.

The term "substituted" refers to a chemical moiety that further contains at least one, preferably from 1 to 5 substituents. Examples of substituents include hydroxyl (-OH), amino (-NH₂), oxy (-O-), carbonyl (>C=O), thiol, alkyl, heteroalkyl, halo, nitro, aryl and heterocyclic groups. These substituents can optionally be further substituted with from 1 to 5 substituents. Examples of substituted substituents include carboxamide, alkylmercapto, alkylsulphonyl, alkylamino, dialkylamino, alkylhydroxy, carboxylate, alkoxycarbonyl, alkylaryl, aralkyl, and alkylheterocyclyl.

The term "halogen" (or halo-) refers to fluorine, chlorine, iodine or bromine; preferably fluorine or chlorine.

The term "alkenyl" (or alkenyl- or alken-) refers to a substituted or unsubstituted, straight, branched or cyclic hydrocarbon chain that contains at least one carbon-carbon double bond, and that preferably contains from 2 to 20 carbon atoms. Alkenyl groups include, for example, ethenyl (or vinyl, -CH=CH₂); 1-propenyl; 2-propenyl (or allyl, -CH₂-CH=CH₂); 1,3-butadienyl (-CH=CHCH=CH₂); 1-butenyl (-CH=CHCH₂CH₃); hexenyl; pentenyl; 1,3,5-hexatrienyl; cyclohexadienyl; cyclohexenyl; cyclopentenyl; cyclooctenyl; cycloheptadienyl; and cyclooctatrienyl.

The term "alkynyl" (or alkynyl- or alkyn-) refers to a substituted or unsubstituted, straight, branched or cyclic hydrocarbon chain that contains at least one carbon-carbon triple bond, and that preferably contains from 2 to 20 carbon atoms. Alkynyl groups include, for example, ethynyl (or acetylenyl, -C≡CH); 2-methyl-3-butynyl; and hexynyl.

The term "heteroalkyl" refers to an alkyl group that contains one or more heteroatoms such as oxygen (O), nitrogen (N), sulfur (S), or phosphorus (P). Examples of heteroalkyl groups include ethers, esters, carbonates, amines, amides, carbamates, imines, nitriles, sulfones, thioethers, thioesters, thiocarbamates, phosphates, phosphonates, and phosphines. A heteroalkyl group may be linked to another chemical group through one or more heteroatoms.

The term "aryl" refers to any substituted or unsubstituted aromatic carbocyclic group that preferably contains from 5 to 20 carbon atoms. An aryl group can be monocyclic or polycyclic. Examples of aryl groups include phenyl, naphthyl, biphenyl, benzyl, tolyl, xylyl, phenylethyl, cumylphenyl, aniline, and N-alkylanilino.

The term "heterocyclic" refers to a substituted or unsubstituted, saturated, unsaturated, or aromatic ring that contains one or more heteroatoms; and that preferably contains from 5 to 10, more preferably from 5 to 6, ring atoms. The term "ring atoms" refers to atoms which are incorporated into the ring structure and excludes other atoms which are pendant to the ring. The ring can be mono-, bi- or polycyclic. The heterocyclic group contains carbon atoms and from 1 to 3 heteroatoms independently selected from the group consisting of nitrogen, oxygen, and sulfur. Examples of heterocyclic groups, which may also be substituted or unsubstituted, include benzathiazoline, benzimidazole, benzofuran, benzothiophene, benzothiazole, benzothiophenyl, carbazole, cinnoline, furan, imidazole, 1H-indazole, indole, isoindole, isoquinoline, isothiazole, morpholine, oxazole (i.e. 1,2,3-oxadiazole), phenazine, phenothiazine, phenoxazine, phthalazine, piperazine, pteridine, purine, pyrazine, pyrazole, pyridazine, pyridine, pyrimidine, pyrrole, quinazoline, quinoline, quinoxaline, thiazole, 1,3,4-thiadiazole, thiophene, 1,3,5-triazines, and triazole (i.e. 1,2,3-triazole).

### BRIEF DESCRIPTION OF THE DRAWINGS

Figure 1 is a vertical cross-section of a multilayer preform useful in making a container according to one embodiment of the present invention.
Figure 2 is a side view of a multilayer container.
Figures 3-5 are horizontal cross-sections taken along line A--A of Figure 2, showing exemplary multilayer structures.
Figure 6 is a graph of dissolved oxygen measurements over time for multilayer polyolefin containers.
Figure 7 is a graph of dissolved oxygen measurements over time for poly(ethylene terephthalate) (PET) based containers.
Figure 8 is a graph of dissolved oxygen measurements over time for PET-based containers.

### DETAILED DESCRIPTION

The present invention includes the use of additives to provide an active oxygen barrier to polymeric materials. The additives of the present invention have low volatilities, and compositions containing the additives can be processed using conventional polymer processing techniques and apparatus without significant reduction in additive content. The present invention includes polymer compositions containing the subject compounds as additives, as well as packaging made from these polymer compositions.

Compounds of the present invention that can be used as additives include compounds containing structure (I): 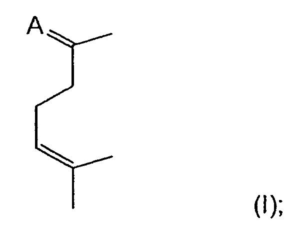 where =A may be an alkenyl group having from 3 to 20 carbon atoms, a cycloalkenyl group having from 5 to 20 carbon atoms, or =CH-E, where -E may be -CH₂OH, -CH(OH)₂, -C(=O)H, -CH₂R¹ or-CHR¹R²; where R¹ may be -O-R³-R⁴ or -O-R⁴, and R² may be -O-R⁵-R⁶ or -O-R⁶; or R¹ and R², together with the atoms to which they are bonded, form a ring.

Examples of "A" moieties where =A is an alkenyl group include propenyl; methyl propenyl; butenyl; methyl butenyl; pentenyl; methyl pentenyl; dimethyl pentenyl; ethyl pentenyl; hexenyl; methyl hexenyl; dimethyl hexenyl; ethyl hexenyl; diethyl hexenyl; hexadienyl; methyl hexadienyl; dimethyl hexadienyl; ethyl hexadienyl; and diethyl hexadienyl. For example, the compound containing structure (I) and having a 4-methyl-3,5-hexadienyl group as A is commonly referred to as "farnesene." Examples of "A" moieties where =A is a cycloalkenyl group include cyclopentenyl; methyl cyclopentenyl; ethyl cyclopentenyl; cyclohexenyl; methyl cyclohexenyl; ethyl cyclohexenyl; cyclohexadienyl; methyl cyclohexadienyl; ethyl cyclohexadienyl; cycloheptadienyl; cyclooctenyl; and cyclooctadienyl. For example, the compound containing structure (I) and having a 4-methyl-3-cyclohexenyl group as A is commonly referred to as "bisabolene."

For compounds where =A is =CH-E and -E is -CH₂R¹ or -CHR¹R², R¹ may be -O-R³-R⁴ or -O-^{R}4, and R² may be -O-R⁵-R⁶ or -O-^{R}6; or R¹ and R² together with the atoms to which they are bonded, form a ring. The groups R³, R⁴, R⁵ and R⁶ may independently be alkyl, alkenyl, alkynyl, heteroalkyl, aryl or heterocyclic. Preferably, a ring containing R¹ and R² has from 5 to 20 ring atoms, more preferably from 5 to 10 ring atoms. These rings may be hydrocarbon rings or heterocyclic rings, may be substituted or unsubstituted, may be fused to another ring, and may be saturated (i.e. cycloalkyl), unsaturated (i.e. cycloakenyl), or aromatic (i.e. phenyl).

Preferably, compounds of the present invention include compounds containing structure (I) where =A is =CH-E. Thus, preferred compounds include compounds containing structure (II): 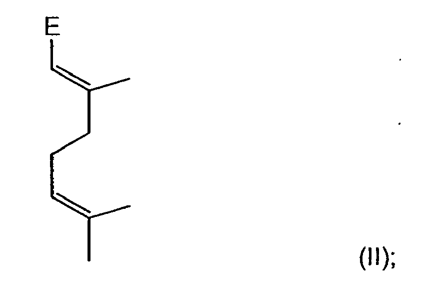 where -E may be -CH₂OH, -CH(OH)₂, -C(=O)H, -CH₂R¹ or -CHR¹R², where R¹ may be -O-R³-R⁴ or -O-R⁴, and R² may be -O-R⁵-R⁶ or -O-R⁶; or R¹ and R², together with the atoms to which they are bonded, form a ring. The groups R³, R⁴, R⁵ and R⁶ may independently be alkyl, alkenyl, alkynyl, heteroalkyl, aryl or heterocyclic. Preferably, a ring containing R¹ and R² has from 5 to 20 ring atoms, more preferably from 5 to 10 ring atoms. These rings may be hydrocarbon rings or heterocyclic rings, may be substituted or unsubstituted, may be fused to another ring, and may be saturated (i.e. cycloalkyl), unsaturated (i.e. cycloakenyl), or aromatic (i.e. phenyl).

Examples of -O-R⁴ and -O-R⁶ independently include alkoxy groups (R⁴ or R⁶ are C₁ to C₂₀ alkyl), such as methoxy, ethoxy, propoxy, cyclopropoxy and cyclohexoxy groups, and may be substituted. Examples of -O-R⁴ and -O-R⁶ independently include aryloxy groups (R⁴ or R⁶ are C₅ to C₂₀ aryl), such as phenoxy, cresoxy, ethylphenoxy, cumyloxy, and naphthoxy groups, and may be substituted. Examples of -O-R³-R⁴ and -O-R⁵-R⁶ independently include aryl-alkoxy groups (R³ or R⁵ are C₁ to C₂₀ alkyl, and R⁴ or R⁶ are C₅ to C₂₀ aryl), such as benzyloxy, 2-ethoxyphenyl and iso-propoxyphenyl groups, and may be substituted on the aryl and/or alkoxy moiety. Examples of -O-R³-R⁴ and -O-R⁵-R⁶ independently include aryl-aryloxy groups (R³ or R⁵ and R⁴ or R⁶ are independently C₅ to C₂₀ aryl), such as cumylphenoxy, biphenoxy and benzylphenoxy groups, and may be substituted on the aryl and/or aryloxy moiety. Examples of -O-R⁴ and -O-R⁶ independently include heteroalkoxy groups (R⁴ or R⁶ are C₁ to C₂₀ heteroalkyl), such as 2-methoxyethoxy, 2-ethoxyethoxy 2-ethoxyacetate groups, and may be substituted. Examples of -O-R⁴ and -O-R⁶ independently include alkenoxy groups (R⁴ or R⁶ are C₂ to C₂₀ alkenoxy), such as propenoxy, butenoxy, isopropenoxy, pentadienoxy, cyclopentenoxy, cyclohexenoxy, oleyloxy, undecylenoxy, geranyloxy, farnesoxy and nerolidoxy groups, and may be substituted.

For compounds of the present invention containing structure (II) where R¹ and R², together with the atoms to which they are bonded, form a ring, the compounds can be represented as structure (III): 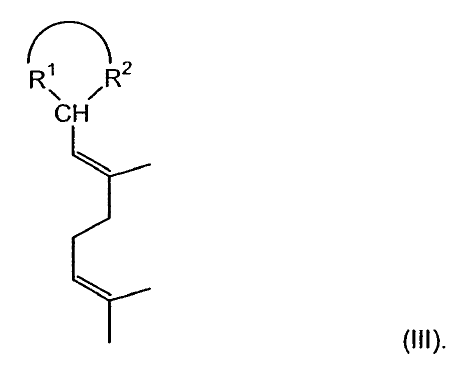 The tertiary carbon atom positioned directly between R¹ and R² is referred to herein as the "bridgehead" carbon. The closed ring is thus formed by the bridgehead carbon, R¹, R², and the other atoms between R¹ and R². Examples of rings containing both R¹ and R² include rings containing the bridgehead carbon bonded to the group -R¹—R²-, where -R¹—R²- can be an alkyl group such as butyl (-C₄H₈-) or pentyl (-C₅H₁₀-); an alkenyl group such as butenyl or pentenyl; a heterocyclic group such as 1,4-butyl-di-oxy (-O-C₄H₈-O-), 1,4-butyl-di-oxy (-O-C₅H₁₀-O-), ethylene glycoxy (-O-C₂H₄-O-) and diethylene glycoxy (-O-C₂H₄-O-C₂H₄-O-); and an aryl group such as catechol (-O-(*ortho-*C₆H₄)-O-); and may be substituted. Thus, a ring containing the bridgehead carbon and the group -R¹—R²-, may be a cycloalkyl group, a cycloalkenyl group, an aryl group, and a heterocyclic group. For example, if -R¹—R²-, is a heterocyclic group, the ring may be similar to a crown ether, containing from 1 to 5 oxygen atoms, or preferably containing from 2 to 3 oxygen atoms; and containing from 3 to 9 carbon atoms, or from 2 to 6 carbon atoms.

The presence of one or more of the compounds of the present invention as an additive in a polymer material can impart active oxygen barrier properties to the composition. In the context of a closed environment with which the active composition, or a material containing the active composition, is in contact, the consumption of molecular oxygen may eliminate or substantially reduce the net ingress of oxygen into the environment. Moreover, the consumption of molecular oxygen may reduce the total enclosed amount of molecular oxygen.

Examples of compounds of the present invention include compounds containing structure (II) where -E is -CHR¹(-O-R⁶), where R⁶ is an alkyl group containing from 1 to 20 carbon atoms; where R⁶ is an alkenyl group containing from 2 to 20 carbon atoms; and where R⁶ is an alkenyl group containing from 4 to 20 carbon atoms and also having 2 or more carbon-carbon double bonds.

Examples of compounds of the present invention include compounds containing structure (II) where -E is -CHR¹(-O-R⁵-R⁶), where R⁵ is an alkyl group containing from 1 to 20 carbon atoms; where R⁵ is an alkyl group containing from 2 to 20 carbon atoms; where R⁵ is an alkenyl group containing from 2 to 20 carbon atoms; and where R⁵ is an aryl group containing from 5 to 20 carbon atoms. These examples further include compounds where R⁶ is an alkyl group containing from 1 to 20 carbon atoms; where R⁶ is an alkyl group containing from 2 to 20 carbon atoms; where R⁶ is an alkenyl group containing from 2 to 20 carbon atoms; and where R⁶ is an aryl group containing from 5 to 20 carbon atoms. These examples further include compounds where R⁵ is an alkyl group containing from 1 to 20 carbon atoms and R⁶ is an aryl group containing from 5 to 20 carbon atoms. These examples further include compounds where R⁵ is an aryl group containing from 5 to 20 carbon atoms and R⁶ is an aryl group containing from 5 to 20 carbon atoms.

Examples of compounds of the present invention include compounds containing structure (II) where -E is -CH₂(-O-R⁴), where R⁴ is an alkyl group containing from 1 to 20 carbon atoms; where R⁴ is an alkenyl group containing from 2 to 20 carbon atoms; and where R⁴ is an alkenyl group containing from 4 to 20 carbon atoms and also having 2 or more carbon-carbon double bonds.

Examples of compounds of the present invention include compounds containing structure (II) where -E is -CH₂(-O-R³R⁴), where R³ is an alkyl group containing from 1 to 20 carbon atoms; where R³ is an alkenyl group containing from 2 to 20 carbon atoms; and where R³ is an aryl group containing from 5 to 20 carbon atoms. These examples further include compounds where R⁴ is an alkyl group containing from 1 to 20 carbon atoms; where R⁴ is an alkenyl group containing from 2 to 20 carbon atoms; and where R⁴ is an aryl group containing from 5 to 20 carbon atoms. These examples further include compounds where R³ is an alkyl group containing from 1 to 20 carbon atoms and R⁴ is an aryl group containing from 5 to 20 carbon atoms. These examples further include compounds where R³ is an aryl group containing from 3 to 20 carbon atoms and R⁴ is an aryl group containing from 5 to 20 carbon atoms.

Examples of compounds of the present invention include compounds containing structure (II) where -E is -CH₂R¹ or -CH-R¹R², and R¹ and/or R² are moieties such as -OCH₃ ; -OCH₂CH₃ ; -OCH₂CH₂CH₃ ; -OCH₂-C₆H₅ ; -OCH=C(CH₃)(CH₂)₂CH=C(CH₃)₂ ; -OC₆H₄-C(CH₃)₂-C₆H₅ and -OCH(CH=CH(CH₂)₇CH₃)-(OCH₂CH=C(CH₃)(CH₂)₂CH=C(CH₃)₂.

Specific examples of compounds of the present invention that can be used as additives include the following:

| | | | |
|---|---|---|---|
| citral - | | structure (II), E is C(=O)H ; | |
| geraniol - | | structure (II), E is CH₂OH ; | |
| citral dimethyl acetal - | | structure (II), E is CH(OCH₃)₂; | |
| citral diethyl acetal - | | structure (II), E is CH(OCH₂CH₃)₂; | |
| citral dipropyl acetal - | | structure (II), E is CH(OCH₂CH₂CH₃)₂; | |
| citral digeranyl acetal - | | structure (II), | |
| | | | E is CH(OCH=C(CH₃)(CH₂)₂CH=C(CH₃)₂)₂; |
| undecylenic aldehyde - | | structure (II), | |
| | digeranyl acetal | | E is CH₂[OCH(CH=CH(CH₂)₇CH₃) |
| | (UADA) | | (OCH₂CH=C(CH₃)(CH₂)₂CH=C(CH₃)₂)] |
| citral ethylene glycyl acetal - | | structure (II), E is a ring designated (-R¹—R²-), which is -O- (CH₂)₂ -O- ; | |
| citral diethylene - | | structure (II), E is a ring designated (-R¹—R²-), | |
| | glycyl acetal | | which is -O- (CH₂)₂ -O- (CH₂)₂ -O-; |
| citral dibenzyl acetal - | | structure (II), E is CH(OCH₂-C₆H₅)₂ ; | |
| citral dicumylphenyl acetal - | | structure (II), E is CH(OC₆H₄-C(CH₃)₂-C₆H₅)₂ ; | |
| farnesene - | | structure (I), A is =CHCH₂CH=C(CH₃)CH=CH₂ ; | |
| and bisabolene - | | structure (I), A is 4-methyl-3-cyclohexene. | |

Preferred compounds of the present invention are compounds containing structure (II), where E is either an aldehyde (-C(=O)H) or is -CH₂R¹ or -CHR¹R², where at least one of R¹ or R² is an ether group having at least two carbon atoms. These preferred compounds include compounds where R¹ and R² form an ether-containing ring as described above. Preferably, if E is -CH₂R¹ or -CHR¹R², neither R¹ nor R² contain a carbonyl functionality ( >C=O ) or a terminal hydroxyl functionality (-CH₂OH). Particularly preferred compounds of the present invention are compounds containing structure (II), where E is either an aldehyde (-C(=O)H) or is -CH₂R¹ or -CHR¹R², where at least one of R¹ or R² is an ether group having at least three carbon atoms. Preferred compounds of the present invention include citral, citral diethyl acetal, citral digeranyl acetal, UADA, citral ethylene glycyl acetal, citral diethylene glycyl acetal, citral dibenzyl acetal, citral dicumylphenyl acetal, and bisabolene. Particularly preferred compounds of the present invention include citral, citral digeranyl acetal, citral ethylene glycyl acetal, citral diethylene glycyl acetal, citral dibenzyl acetal, and citral dicumylphenyl acetal.

Metals that may be used with an additive compound of the present invention and the polymer include transition metals. Examples of transition metals include iron, cobalt, nickel, ruthenium, rhodium, palladium, osmium, iridium, platinum, copper, manganese and zinc. The metal may be added as a salt or complex with another element or chemical group. For example, the metal may be added as a complex with an organic ligand such as a carboxylate, an amine, or an alkene. Examples of ligands which may form complexes with the above transition metals include naphthenate, octoate, tallate, resinate, 3,5,5-trimethylhexoate, stearate, palmitate, 2-ethylhexanoate, neodecanoate, acetate, butyrate, oleate, valerate, cyclohexanebutyrate, acetylacetonate, benzoylacetonate, dodecylacetylacetonate, benzoate, oxalate, citrate, tartrate, dialkyldithiocarbamate, disalicylalethylenediamine chelate, and phythalocyanine. Examples of specific metal complexes which may be useful include cobalt (II) 2-ethylhexanoate, cobalt (II) neodecanoate, cobalt (II) acetate, and cobalt (II) oleate.

A polymeric material may be used as a host polymer to provide an active oxygen barrier composition in combination with the compound of the present invention and the metal. Examples of host polymers include polyolefins, such as polyethylene, polypropylene, polyisoprene, polybutadiene and poly(vinyl alcohol); styrenic polymers, such as polystyrene and poly(4-methylstyrene); polyacrylates, such as poly(methyl acrylate), poly(ethyl acrylate), poly(methyl methacrylate), and poly(ethyl methacrylate); polyamides, such as nylon-6,6, nylon 6, nylon 11, and polycaprolactam; other nitrogen-containing polymers, such as polyacrylamide, polyacrylonitrile and poly(styrene-co-acrylonitrile); halogenated polymers such as poly(vinyl chloride), poly(vinylidene chloride) and polytetrafluoroethylene; polyesters, such as poly(ethylene terephthalate), poly(butylene terephthalate), poly(ethylene naphthalate), poly(lactic acid), and poly(glycolic acid); polycarbonates, such as poly(4,4'-isopropylidine-diphenyl carbonate); polyethers, such as poly(ethylene oxide), poly(butylene glycol), poly(epichlorohydrin), and poly(vinyl butyral); heterocyclic polymers, such as polyimides, polybenzimidazoles, polybenzoxazoles, and poly(vinyl pyrrolidone); other engineering polymers such as polysulfones, poly(ether ether ketones), poly(phenylene oxide), and poly(phenylene sulfide); inorganic polymers, such as polysiloxanes, polysilanes, and polyphosphazenes; natural polymers and their derivatives, such as dextran, cellulose, and carboxymethyl cellulose; and ionomers, such as sulfonated polymers (i.e. sulfonated polystyrene) and carboxylic acid-containing polymers (i.e. copolymers of acrylic acid or methacrylic acid). Examples of host polymers also include copolymers of the repeating units of these and other polymers and include mixtures (i.e. blends) of these polymers.

Preferred host polymers include polymers that are conventionally used for packaging, either alone or in combination with other polymers. Examples of polymers used for packaging include polyethylene (PE), polypropylene (PP), polystyrene, poly(methyl acrylate), poly(methyl methacrylate), poly(ethyl acrylate), poly(ethyl methacrylate), poly(vinyl alcohol) (PVOH), poly(ethylene-co-vinyl alcohol) (EVOH), poly(ethylene-co-methyl acrylate) (EMAC), polyacrylonitrile (PAN), poly(styrene-co-acrylonitrile) (SAN), poly(styrene-co-maleic anhydride), poly(vinyl chloride) (PVC), poly(vinylidene chloride) (PVDC), poly(ethylene terephthalate) (PET), poly(butylene terephthalate) (PBT), poly(ethylene naphthalate) (PEN), poly(lactic acid), and poly(glycolic acid). Some of these and other polymers can be used as barriers materials, especially in multilayer packages. Exemplary barrier materials include EVOH, PEN, PVOH, PVDC, PAN, and poly(glycolic acid).

The additive compound of the present invention may be mixed with the metal and the host polymer by a variety of methods. For example, the compound, the metal and the host polymer may be dissolved in a common solvent and cast into a film or sprayed onto another polymer as a coating. The solvent may be evaporated to provide a solid material. The compound may be added to the host polymer without any solvent, and the two components can be mixed mechanically. Mechanical mixing may further be carried out at elevated temperatures by thermal processing techniques known to those skilled in the art. The metal can be mixed with the additive compound prior to contacting the host polymer with the additive, or the metal can be mixed with the host polymer separately. For example, the metal may be added to the host polymer prior to the contact between the host polymer and the additive compound, or the metal may be added to the combined host polymer and additive compound. The additive compound and metal may also be mixed together, and this mixed composition added to the host polymer.

The combination of the additive compound of the present invention and the metal, optionally including a host polymer, provides an active oxygen barrier composition, also referred to herein as the "active composition." For example, an active composition containing a compound of the present invention and a metal without a host polymer may be deposited on a polymer substrate. In another example, an active composition containing a compound of the present invention, a metal and a host polymer may be formed into a single-layer package. In another example, an active composition containing a compound of the present invention, a metal and a host polymer may be formed as a portion or layer of a package. The active composition may be used alone for making a polymer-based product, or it may be used in combination with other polymers. A host polymer containing a compound of the present invention and the metal can be blended with a different polymer to form the overall active composition. The second polymer may contain no additives, or it may contain a compound of the present invention and/or a metal, and the compound of the present invention and/or the metal may be the same as or different from those present in the original host polymer. The use of polymer blends in packaging materials is described for example in U.S. Patent Nos. 6,399,170 B1 and 6,395,865 B2.

When a host polymer is present in the active composition, the additive compound of the present invention is preferably present in the active composition in a concentration from 0.001 percent by weight (wt%) to 5 wt%. More preferably, the compound is present in a concentration from 0.01 wt% to 4 wt%. Even more preferably, the compound is present in a concentration from 0.05 wt% to 3 wit%. If a metal is present in the active oxygen barrier polymer, it is preferably present in a concentration of at least 30 parts per million (ppm). More preferably, if a metal is present its concentration is from 30 ppm to 5,000 ppm, even more preferably from 100 ppm to 3,000 ppm, and still more preferably from 200 ppm to 2,500 ppm.

The active composition, containing a compound of the present invention and the metal, can be formed into a package, a precursor to a package, or a component of a package. The active composition may also be provided in a form suitable for storage, such as pellets, powder, flakes, or a sheet or film. These forms can be stored or can be transported to a processing apparatus to be further manipulated into a form suitable for use in packaging materials. Further manipulation of the active composition can include, for example, melt processing of the host polymer containing an additive compound of the present invention and a metal by extrusion into package form.

The active composition may be included as one or more components in a multi-phase composition for packaging. A multi-phase structure containing the active composition may be, for example, a package, a component of a package, or a precursor to a package. Examples of multi-phase compositions include polymer blends containing two or more phases. The phases may be co-continuous, or one of the phases may be a matrix phase having the other phase or phases dispersed within the matrix. In a blend composition, the phase containing the active composition is referred to as the "active phase" or the "active composition phase." Examples of multi-phase compositions also include layered compositions and multilayer structures. An active composition present as part of a multilayer structure is referred to herein as an "active barrier layer" or, more simply, as an "active layer." An active layer can contain a compound of the present invention and a metal alone or can contain a compound of the present invention and a metal in a host polymer.

The processing of the active composition into a component of a package, or a component of or a precursor to a package, preferably involves thermal processing. An overview of thermal processing is provided, for example, in Introduction to Polymer Science and Technology: An SPE Textbook, H.S. Kaufman, ed., Wiley-Interscience, 1977; particularly in chapters 9-11. Various aspects of thermal processing include for example extrusion, injection molding, blow molding, rotational molding, thermoforming, thermoset molding, compression molding, foaming, and spin lining. These and other thermal processing techniques are well known to those skilled in the art.

Thermal processing of polymeric materials is defined herein as any processing that involves temperatures above ambient temperature. Typical temperatures for thermal processing are above 50°C, and can often be above 100°C, 150°C, 200°C, 250°C, or 300°C. The type of manipulation of the polymer at these elevated temperatures can vary. For example, the heated polymer can be compressed, stretched, mixed with other components, coated onto another polymer, injected into a mold, or drawn into fibers, sheets or tubes. The mixing of an additive compound of the present invention and a metal with a host polymer is preferably performed at elevated temperatures using these standard techniques. The mixing of polymers with other polymers or with non-polymeric additives at elevated temperatures is typically accomplished by extrusion. Extrusion involves the simultaneous heating and mixing of the components of a polymer composition, where the mixing is carried out by a rotating screw in a barrel. The composition is forced to the end of the extruder by the motion of the screw, and the mixed product can then be formed into the desired shape. Extrusion is typically used as a first step in thermal processing even if the polymer composition does not require any mixing.

In an example of a multilayer package containing an active layer, the polymer compositions for the layers can be co-extruded and blow molded directly into the shape of the package. This process of extrusion blow molding is described, for example in U.S. Patent Nos. 5,851,479; 3,737,275: 3,873,661; 4,523,904; 4,649,865; and 4,648,831,

The extrusion blow molding process begins with the extrusion of a hollow tube of melted polymer, referred to as a "parison". The parison is extruded between two complementary halves of a blow mold. The blow mold halves are closed around the parison, and the parison is blown into the shape of the mold by air that is injected through a needle piercing the parison. The blow mold halves may also be equipped with vents to facilitate the expansion of the parison into the shape of the mold. The mold vents may also be attached to a vacuum source that can be activated during the blowing of the parison. Coextrusion is the process of extruding two or more polymers in a layered structure, and can be performed by a variety of methods known to those skilled in the art.

Extrusion blow molding can provide for the active composition to be present in one or more layers in a multilayer-structure. This process can also allow for the incorporation of recycled material in the interior of the structure. Recycled material is material that has been used previously in the formation of a package, a portion of a package, or a precursor to a package. The term "recycle" as used herein includes both regrind material and post-consumer material. Typically, a recycled material includes exclusively regrind or post-consumer material. Regrind material is material that has been trimmed or discarded during the manufacture of a product and has not been used by a consumer. Post-consumer material is derived from products that have been used by a consumer and subsequently recycled. In contrast to recycled materials in general, "virgin" material is material that has not been used previously in the formation of a package, a portion of a package, or a precursor to a package, although the material may have been subjected to a variety of processing steps.

In another example of a multilayer package containing a layer of an active composition, the polymer compositions for the layers can be injected into a mold in a certain sequence. Polymer processing by sequential injection is described, for example in U.S. Patent Nos. 6,063,325; 4,550,043; 4,609,516 and 4,781,954. In one example of a sequential injection process, a five-layer container is formed having inner and outer layers of a conventional packaging polymer, a central core layer of a conventional packaging polymer, and first and second intermediate layers. The combined compound of the present invention and metal may be present in any of these layers. It is desirable for the compound of the present invention to be present in the central core layer and/or in the intermediate layers. The intermediate layers can be made very thin, on the order of 0.01-0.15 mm. In this process, a first metered shot of a melt of a conventional packaging polymer is injected into a mold for a structure. Then, a second metered shot of a melt of the intermediate layer polymer is injected into the mold containing the first shot of conventional packaging polymer. Finally, a third metered shot of a melt of a conventional packaging polymer, which may or may not be the same as the material used for the first shot, is pushed into the intermediate layer polymer to form two thin intermediate layers adjacent the inner and outer polymer layers (from the first shot), with the molten core layer (from the third shot) between the two intermediate layers.

In another example of a multilayer package containing a layer of an active composition, the polymer compositions for the layers can be injected into a mold simultaneously. Polymer processing by simultaneous co-injection molding is described, for example in U.S. Patent No. 4,990,301

In one example of a simultaneous co-injection molding process, a three-layer container is formed having inner and outer layers of a conventional packaging polymer, and a central core layer. The combined compound of the present invention and metal may be present in any of these layers. It is desirable for the compound of the present invention to be present in the core layer. The inner and outer layers may have identical compositions or may have different compositions, such that a three-layer container may contain a total of two or three different materials.

In another example of a simultaneous co-injection molding process, a five-layer container is formed having inner and outer layers of a conventional packaging polymer, a central core layer of a conventional packaging polymer, and first and second intermediate layers. The combined compound of the present invention and metal may be present in any of these layers. It is desirable for the compound of the present invention to be present in the central core layer and/or in the intermediate layers. The inner and outer layers and the central core layer may have identical compositions or may have a combination of different compositions. That is, a five-layer container may contain a total of two different materials, three different materials, four different materials, or five different materials. In yet another example of a simultaneous co-injection molding process, a four-layer container is formed containing three different materials. The combined compound of the present invention and metal may be present in any of these layers. It is desirable for the compound of the present invention to be present in layers that are not on the exterior of surfaces of the container.

In another example of a multilayer package containing a layer of an active composition, the polymer composition for a first layer can be injected into a mold and allowed to solidify. The solidified article is then placed into another mold, and the polymer composition for a second layer is injected into the mold, coating at least a portion of the first layer, This technique is referred to either as overmolding or as sleeve molding. Polymer processing by overmolding is described, for example in U.S. Patent No. 6,428,737 81.

Each molding step can involve the injection molding of a single layer or can involve the injection molding of multiple layers. For example, one or more molding steps can involve the formation of a multilayer structure such as by sequential injection or by simultaneous co-injection. Also, more than two molding steps can be performed in making the overall multilayer structure. In one example of an overmolding process, a five-layer container is formed having inner and outer layers of a conventional packaging polymer, a central core layer of a conventional packaging polymer, and first and second intermediate layers. The combined compound of the present invention and metal may be present in any of these layers. It is desirable for the compound of the present invention to be present in the central core layer and/or in the intermediate layers.

In another example of an overmolding process, a three-layer container is formed having inner and outer layers of a conventional packaging polymer and a central core layer of a conventional packaging polymer. The combined compound of the present invention and metal may be present in any of these layers. It is desirable for the compound of the present invention to be present in the central core layer. In yet another example of an overmolding process, a two-layer container is formed having inner and outer layers of conventional packaging polymers. The combined compound of the present invention and metal may be present in either of these layers.

The techniques of sequential injection molding, simultaneous co-injection molding and overmolding provide for the active composition to be present in one or more thin layers in a multilayer structure. These processes can also allow for the incorporation of recycled material in the interior of the structure. These processes can be used to form a package, such as a bottle or a closure, and can also be used to form a precursor to such a package. The precursor to the package is referred to as a "preform." The preform can be expanded by injection of a gas into the open center of the preform and/or by applying vacuum to the outer surfaces of the preform. This technique is generally known as blow molding. An example of the formation of a multilayer preform structure and subsequent blow molding of the preform into a container is described, for example, in U.S. Patent No. 5,804,016.

For example, the preform may be formed into a package using a stretch blow-molding apparatus. In methods using a stretch blow-molding apparatus, the preform is reheated to a temperature above the glass transition temperatures of each of the layers, and is then positioned in a blow mold. A stretch rod stretches the preform within the blow mold to ensure complete axial elongation and centering of the preform. A blowing gas such as compressed air is introduced to radially inflate the preform during axial stretching so as to match the shape of the interior of the blow mold. Containers formed using this method can be substantially transparent while also having increased strength due to strain-induced crystallization.

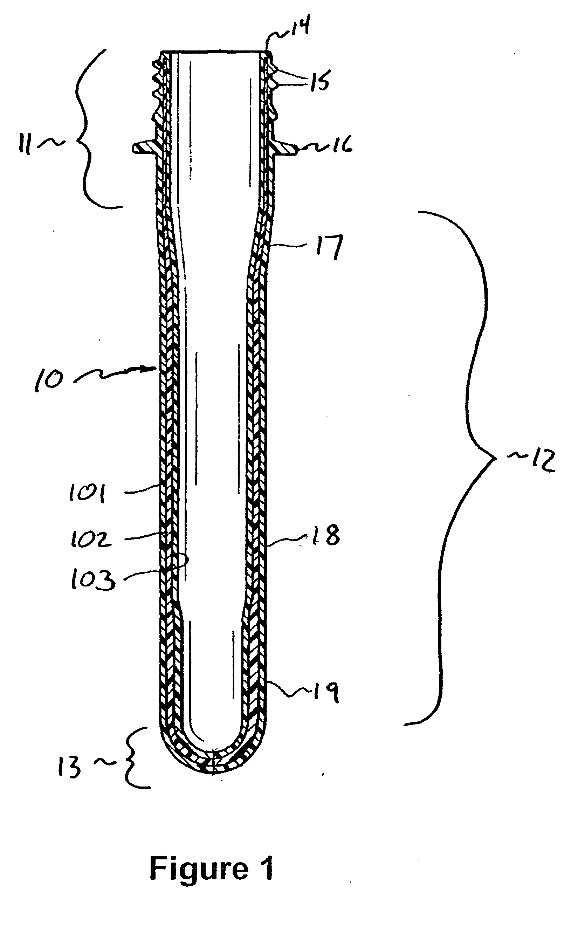

Figure 1 shows an example of a cylindrical preform **10** including an upper neck portion **11,** referred to as the "finish," integral with a lower body-forming portion **12.** The neck portion **11** includes an upper sealing surface **14** which defines the open top end of the preform, and an exterior surface having threads **15** and a lowermost flange **16.** Below the neck finish, the body-forming portion **12** includes a flared shoulder-forming portion **17,** increasing (radially inwardly) in wall thickness from top to bottom; a cylindrical panel-forming section **18,** having a substantially uniform wall thickness; and a thickened base-forming section **19,** which is thicker than the panel-forming section. The bottom end **13** of the preform is substantially hemispherical and is typically thinner than the upper base-forming portion. The preform illustrated in Figure 1 contains two different materials in three layers. For example, the outer layer **101** and the inner layer **103** of may each be a conventional packaging polymer, such as PET or a polyolefin, and the core layer **102** may be a layer of an active barrier composition.

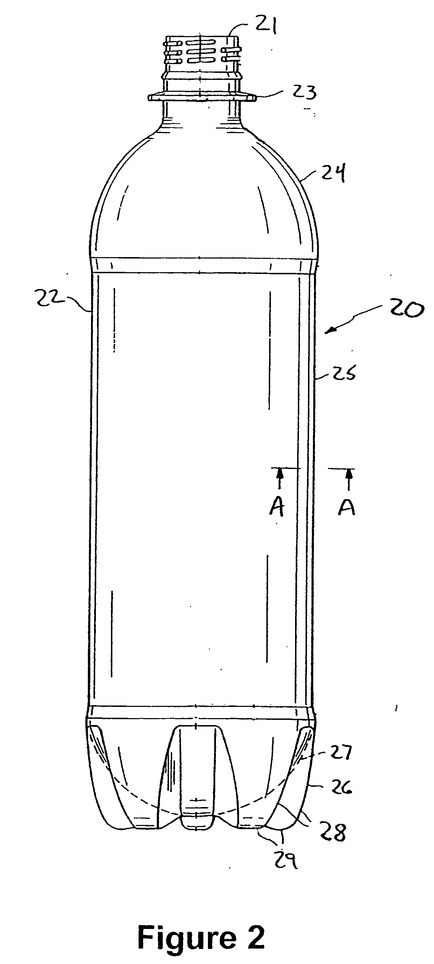

Figure 2 illustrates an example of a multilayer beverage bottle **20.** A multilayer bottle as illustrated can be made by a variety of standard processing techniques including the sequential injection molding and subsequent blow molding, and including the extrusion blow molding. The bottle has an open top end **21** and receives a screw-on closure. The expanded container body **22** includes an upper flared shoulder section **24** with an outwardly-protruding profile, and which generally increases in diameter from below the neck finish flange **23** to a cylindrical panel section **25.** For beverage bottles that may be used for pressurized (i.e. carbonated) beverages and/or for bottles that may be subjected to pasteurization, it is preferable to provide a rounded or hemispherical shoulder **24,** since this shape maximizes the biaxial orientation and minimizes the applied stress levels. The expanded container body **22** may also include a footed base **26,** which has a substantially hemispherical bottom wall **27.** The bottom wall may also have legs **28** extending downwardly from the bottom wall to form foot pads **29** on which the container rests.

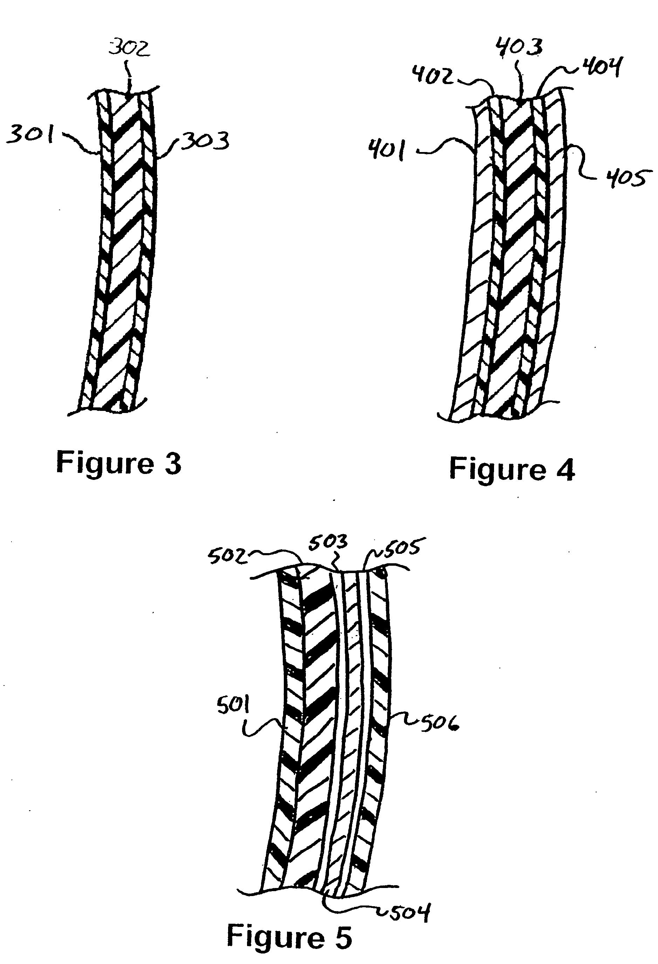

Figure 3 shows an example of a cross-section of a multilayer wall, including but not limited to the panel wall **25,** including inner layer **301** and outer layer **303** made of a conventional packaging polymer, and a core layer **302** of an active barrier composition. In a specific example of these "two-material three-layer" package walls, a structure has inner and outer layers of virgin polyester and a core layer of recycled polyester containing a compound of the present invention and a metal. In another specific example of these "two-material three-layer" package walls, a structure has inner and outer layers of virgin PET and a core layer of recycled PET containing a compound of the present invention and a metal. In yet another specific example of these "two-material three-layer" package walls, a structure has inner and outer layers of virgin polyester and a core layer of EVOH containing a compound of the present invention and a metal.

Figure 4 illustrates an example of a multilayer wall having three different materials in five layers. For example, the outer layer **405** and the inner layer **401** of may each be a conventional packaging polymer, such as PET or a polyolefin, and these polymers are preferably virgin materials. The core layer **403** and the intermediate layers **402** and **404** may be a variety of different materials depending on the intended use of the overall package. For example, the core layer may be an active barrier layer while the intermediate layers are adhesive layers to prevent delamination of the core from the outer and inner layers. In another example, the core layer may be an active barrier layer while the intermediate layers are made of another barrier material. In yet another example, the core layer may be a barrier material while the intermediate layers are made of an active barrier composition. In yet another example, the core layer may be recycled conventional packaging polymer while the intermediate layers are active barrier layers.

In a specific example of these "three-material five-layer" package walls, a structure has inner and outer layers of virgin polyester, intermediate layers of EMAC containing a compound of the present invention and a metal, and a core layer of recycled polyester. In another specific example of these "three-material five-layer" package walls, a structure has inner and outer layers of virgin polyolefin, intermediate layers of an adhesive composition, and a core layer of polyolefin containing a compound of the present invention and a metal. In yet another specific example of these "three-material five-layer" package walls, a structure has inner and outer layers of virgin PET, intermediate layers of EMAC containing a compound of the present invention and a metal, and a core layer of recycled PET. In yet another specific example of these "three-material five-layer" package walls, a structure has inner and outer layers of virgin PET, intermediate layers of EVOH, and a core layer of recycled PET containing a compound of the present invention and a metal. In yet another specific example of these "three-material five-layer" package walls, a structure has inner and outer layers of virgin PET, intermediate layers of EVOH containing a compound of the present invention and a metal, and a core layer of virgin or recycled PET. In yet another specific example of these "three-material five-layer" package walls, a structure has inner and outer layers of virgin PET, intermediate layers of EVOH containing a compound of the present invention and a metal, and a core layer of PET.

Figure 5 illustrates an example of a multilayer wall having four different materials in six layers. For example, the outer layer 506 and the inner layer **501** may each be a conventional packaging polymer, such as a polyester or a polyolefin, and these polymers are preferably virgin materials. The adhesive layers **503** and **505** help to prevent delamination of the barrier layer **504** from the recycle layer **502** and the outer layer **506.** The barrier layer **504** may be an active barrier composition. The recycle layer **502,** containing recycled polymer, may also be an active barrier layer. One or both of the recycle layer and the barrier layer may be an active barrier layer.

In a specific example of these "four-material six-layer" package walls, a structure has inner and outer layers of virgin polyolefin, a barrier layer of EVOH, and a layer of recycled polyolefin containing a compound of the present invention and a metal. In another specific example of these "four-material six-layer" package walls, a structure has inner and outer layers of virgin polyolefin, a barrier layer of EVOH containing a compound of the present invention and a metal, and a core layer of recycled polyolefin. In yet another specific example of these "four-material six-layer" package walls, a structure has inner and outer layers of virgin polyolefin, an active barrier layer of EMAC containing a compound of the present invention and a metal, and a core layer of recycled polyolefin. In yet another specific example of these "four-material six-layer" package walls, a structure has inner and outer layers of virgin polyolefin, a barrier layer of a chlorinated polymer, and a core layer of recycled polyolefin containing a compound of the present invention and a metal. In yet another specific example of these "four-material six-layer" package walls, a structure has inner and outer layers of virgin polyolefin, a barrier layer of a chlorinated polymer containing a compound of the present invention and a metal, and a core layer of recycled polyolefin.

In an example of a variation of these package walls, a "four-material four-layer" structure has an inner layer of EVOH, an outer layer of polyolefin, a layer of recycled polyolefin between the EVOH and the outer polyolefin, and an adhesive layer between the EVOH and the recycled polyolefin. A compound of the present invention and a metal may be present in the EVOH and/or in the recycled polyolefin layer. In another example of a variation of these package walls, a "five-material six-layer" wall has a structure identical to that of a four-material six-layer wall, except that the inner layer of polyolefin is a different material from that of the outer layer of polyolefin.

In another example of a multi-phase package containing an active composition, the structure is a closure for a bottle, such as a screw-on closure or a snap-on closure. Closure structures are typically more rigid than the bottles for which they are used, and their walls can have a greater thickness. Closure structures can be made by standard thermal processing techniques as described above. Closures are not typically expanded by processes such as blow molding, and injection molding or compression molding techniques are normally sufficient. Cross sections of multilayer closures can be represented by Figures 3-5.

In another example of a multi-phase package containing an active composition, the structure is a liner for a closure. In one example of a closure liner, an active composition containing a host polymer, a metal and a compound of the present invention can be compression molded in the interior of a closure, as described for example in U.S. Patent Nos. 4,807,772; 4,846,362; 4,984,703; 6,371,318; and 6,399,170.

In another example of a closure liner, the active composition can be coextruded with one or more polymers, which may be conventional packaging polymers and may include another barrier material. The coextrudate can then be formed into a multilayer pellet by a layer multiplication apparatus. The coextrudate can also be used in an unlayered form, such that the multi-phase pellet is a blend. The liner is formed by depositing the pellet in the flat interior of the closure and subjected to compression molding. The molding can be performed manually or by an apparatus as disclosed in U.S. Patent No. 5,451,360.

In another example of a closure liner, an active composition containing a host polymer, a metal and a compound of the present invention can be injection molded into a mold in the shape of the liner or can be overmolded to the interior of the closure.

In another example of a closure liner, an active composition containing a host polymer, a metal and a compound of the present invention can be applied to a closure by a spin lining process. Materials useful for spin lining are typically plastisol compositions in which the host polymer is flexible at room temperature. Plastisol compositions that are active compositions or that contain one or more layers of an active composition can also be used as gaskets and/or as sealant compounds. A plastisol containing an active composition can be used for example, as a sealant compound between the body and the lid of a metal can or as a gasket between a glass or plastic package and a closure.

The liner formed on the inside surface of the closure can have discrete layers of the active composition and one or more other polymers in the multilayer structure. Removable liners may also be made as multilayer structures containing an active layer. It may be desirable for the top layer to contain an elastomeric material and/or special plasticizers to provide an adequate seal between the closure and the container on which the closure is to be used. It may also be desirable for the bottom layer to include an adhesive to prevent delamination of the liner from the closure. Cross sections of a liner for a closure can be represented by Figures 3-5. Closure liners having multiple layers can also be constructed so that the liner has an inner seal portion and a reusable portion. These two-part liners can provide for a seal that remains over the container opening after the user has opened the closure. This can be especially helpful for products requiring a tamper-resistant seal, such as pharmaceuticals. The reusable portion of the liner remains adhered to the closure and provides a seal between the closure and the container after the inner seal has been removed by the user. The active composition can be present as a layer in the removable inner seal and/or in the reusable liner that remains in the closure.

In another example of a multilayer package containing a layer of an active composition, the multilayer structure is a sheet of material. Multilayer sheet structures can be produced by a variety of techniques. For example, multilayer sheets can be formed by a sheet casting process involving coextrusion of the layers onto a controlled temperature casting roll. The extrudate passes around the first roll and then onto a second controlled temperature roll, which is typically cooler than the first roll. The controlled temperature rolls help to control the rate of cooling of the sheet after it exits the extruder. Once cooled and hardened, the resulting film is preferably transparent. In another example, multilayer sheets can be formed by blown film techniques. A blown film forming apparatus may include a circular die head through which the extrudate is forced, forming a bubble of the material. The bubble is ultimately collapsed to form the multilayer sheet.

Sheet structures can be used, for example as films for wrapping, as seals for open ended packages, as bags, or as liners for closure structures. For example, sheet materials may be produced by co-extruding the layer materials into the form of a flat sheet. The sheet can then be trimmed and wound onto rolls or folded into stacks for storage or further processing. For example, spools of multilayer sheet material may be provided directly to a user for wrapping other products. In another example, disks may be punched from a multilayer sheet, and these disks may be inserted into the interior of a closure structure. In yet another example, a multilayer sheet may be cut and attached such that a bag or pouch is formed. The bag or pouch may further be modified to contain a reusable seal. In yet another example, a multilayer sheet may be thermoformed into a package by heating the material above a softening temperature and pressing the sheet against a mold or vacuum drawing the sheet against a mold. Thermoforming can be used to form packaging materials such as trays, cups, and portions of bottles (see, for example Introduction to Polymer Science and Technology: An SPE Textbook, H.S. Kaufman, ed., pp. 573-580). Cross sections of multilayer sheet materials and package walls made from multilayer sheet materials can be represented by Figures 3-5.

In these and other packaging formats, the packaging product can be represented as one or more walls. The term "wall" refers to a structure that is part of a package, and may be a single layer structure, a multilayer structure, or a single layer within a multilayer structure. The thickness of the wall is the thickness of the single layer or a total thickness of the multiple layers. For example, a wall may be a sheet of material such as those used for flexible bag packaging; a wall may be a substantially rectangular panel such as those found in box packaging; a wall may be a substantially cylindrical structure such as the central portion of a bottle. Although it is convenient to describe a wall as a precise geometrical shape, a wall structure may have a complex shape. In the example of a bottle package, any portion of the bottle may be considered a wall, including the central portion, the top portion near the opening, and the bottom portion near the base. In addition, the closure for a bottle also contains one or more wall structures, and the closure liner may be considered a wall alone or in combination with the closure. Gaskets and layers of sealant compound may also be considered to be package walls.

Packaging materials containing an active composition are characterized by the ability to consume oxygen. It is desirable that a package containing an active composition can prevent a net increase in the oxygen content of an enclosed substance. It is even more desirable that a package containing an active composition can reduce the oxygen content of an enclosed substance. The enclosed oxygen content includes both the oxygen concentration of the atmosphere within the package and the oxygen concentration of the contents. The enclosed oxygen content within a container can depend on factors other than transmission through the polymer packaging. In the example of bottles, there can be leakage through the connection between the closure and bottle.

The active oxygen barrier performance of a package can be measured by sealing a substance in the package and determining the O₂ concentration in the substance or in the atmosphere enclosed in the package. For example, a measurement method may involve filling the bottle with a volume of a liquid such as water, sealing the bottle, storing the liquid in the bottle for a period of time, and monitoring the oxygen content to determine the amount and/or rate by which the oxygen content is reduced in the liquid. Preferably, a reduction in the enclosed oxygen content is maintained for at least 16 weeks.

Preferably, active compositions can be stored in an ambient atmosphere for a significant period of time without substantial loss of active oxygen barrier performance. The term "ambient atmosphere" refers to an atmosphere of 21 % oxygen (air) and a relative humidity of 50% at 23° C. Such stability to ambient conditions allows for processing and storage of the active composition before package manufacture. A lack of stability to ambient conditions can necessitate the use of oxygen-depleted environments for the processing and storage of the active composition. In one example, an active composition exhibits minimal loss of its active oxygen barrier performance until it is placed in contact with a liquid substance.

A variety of screening tests may be helpful in predicting the performance of an active composition without having to form a package from the composition or including a layer of the composition. One screening test that may be used is the "solids screening test." This test can be performed on injection-molded plaques of the active polymer, where each plaque has dimensions of 6.25 inches (158.75 mm) long by 1.75 inches (44.45 in) wide and having five equal sections with increasing stepped thicknesses of 0.04 in (1 mm), 0.07 in (1.78 mm), 0.10 in (2.54 mm), 0.13 in (3.3 mm), 0.16 in (4.06 mm). Seven plaques are enclosed in a 32-ounce glass jar and one ounce of water is added under ambient air (21 % oxygen at 23° C). The plaques rest on a platform above the water in the jar. This test can also be performed on the active polymer in the form of pellets having sizes such that 30-60 pellets have a mass of 1 gram. Approximately 100-150 grams of pellets are placed on the platform above the water. The jar is capped with a standard canning jar lid, having a rubber septum. A syringe is inserted through the septum to withdraw a gas sample from the jar; the gas sample is injected into a MOCON model PACCHECK 450 Head Space Analyzer to measure the oxygen content (available from MOCON, 7500 Boone Ave. North, Minneapolis, Minnesota 55428 USA). After measuring an initial oxygen content (typically 21.3%), subsequent measurements are taken over a period of several weeks. The rate of reduction of the enclosed oxygen content can be determined by measuring the slope of a graph of the enclosed oxygen content as a function of time. A higher slope corresponds to a higher rate of oxygen reduction.

Another useful screening test is the liquid screening test, in which the additive of interest is sealed in a container either as a neat liquid or as a mixture in n-propanol. In this test, the compound or a mixture containing the compound is placed in a clean glass jar and sealed with a metal closure having a rubber septum. A solution containing an appropriate concentration of a metal is injected into the container through the septum, and the oxygen content is then monitored as described for the solids screening test.

Additive compounds of the present invention containing structures (I), (II) or (III) exhibit surprising and unexpected active oxygen barrier properties relative to other additives that do not contain these structures. Referring to the following examples, liquid screening of a variety of compounds has demonstrated that compounds containing structures (I), (II) or (III) (Examples 1-10) can provide a reduction in oxygen content to 19% or less within 100 days. Several of these compounds provided a reduction in oxygen content to 19% or less within 50 days, and several others within as little as 7 days. The compounds that did not contain structures (I), (II) or (III) (Examples 11-22) did not provide for a reduction in oxygen content below atmospheric levels. The specific examples of compounds of the present invention containing structures (I), (II) or (III) included citral, citral dimethyl acetal, citral digeranyl acetal, UADA, citral ethylene glycyl acetal, citral diethylene glycyl acetal, citral dibenzyl acetal, citral dicumylphenyl acetal, farnesene and bisabolene.

The oxygen barrier properties of the compounds of the present invention when formulated into an active barrier composition may be dependent on the characteristics of the host polymer in the composition. Solids screening tests of the additives in polymer matrices such as PET, EVOH, PE, and EMAC have demonstrated that some of these compounds can exhibit desirable active barrier properties in one or more of these polymers but not in others. In particular, it appears that the measured reduction in oxygen content is not as great when the additive is present in a barrier material such as EVOH. Without wishing to be bound by any theory of operation, it is believed that the barrier polymer can inhibit contact between the additive compound and molecular oxygen under the conditions of the solids screening test, leading to a lack of oxygen consumption. For a package containing an active barrier layer having a host polymer of a barrier material, the actual use conditions can be very different than the conditions of the solids screening test. For example, a closed package in which the contents have an oxygen concentration less than atmospheric content will present a driving force for the ingress of oxygen into the package due to the oxygen concentration gradient that will exist between the external atmosphere and the interior of the package. This gradient and driving force can be especially pronounced when the package contents contain little or no enclosed oxygen. The use of barrier materials as host polymers is thus considered a useful option in the manufacture of packaging materials. As a particular example, farnesene and bisabolene, two compounds that include structure (I), showed small reductions in oxygen content as measured by the solids screening test when incorporated into PET and EMAC respectively. These compounds are believed to be useful in active oxygen barrier compositions in actual use conditions. Thus, it should be understood that the barrier properties of these additives may not necessarily be unveiled by a solids screening test and may be seen when these additives are incorporated into a package.

### EXAMPLES

### Examples 1-22 : Liquid Screening Of Compounds

A variety of compounds were tested for their ability to reduce the oxygen content of the atmosphere in a closed container. Each compound was separately added to a clean glass jar, either as a solution in n-propanol or in neat form (citral and undecylenic aldehyde digeranyl acetal only). Each jar was then fitted with a metal closure and a rubber septum, which allowed access to the interior of the jar via a syringe needle. The seals around the metal closure and the rubber septum were then treated with an epoxy adhesive to provide a gas-tight seal. A solution of cobalt neodecanoate in n-propanol was injected into each jar. For the compounds that were mixed with n-propanol prior to sealing, the amount of cobalt neodecanoate solution added provided a final concentration of the complex in the jar of 1,000 ppm. For the neat citral and undecylenic aldehyde digeranyl acetal, 0.2 grams of the complex were added. The compositions of the examples are given in Table A.

The atmosphere in each jar, also referred to as "headspace", was sampled over time, and the oxygen content was analyzed using a PACCHECK headspace oxygen analyzer (MOCON, Minneapolis, MN, model #450). The measured oxygen content over time for each example is shown in Table B. A decrease in headspace oxygen content over time was observed for Examples 1-10.

**Table A - Compositions For Liquid Screening**

| **Example No.** | **Compound** | | **n-propanol (mL)** | **Cobalt neodecanoate** |
|---|---|---|---|---|
| | **Structure** | **Loading** | | |
| 1 | 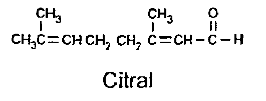 | 10 mL | - | 0.2 g |
| 2 | 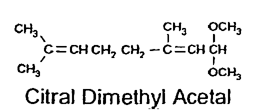 | 9 mL | 100 | 1,000 ppm |
| 3 | 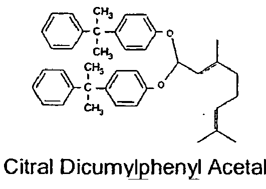 | 2g | 100 | 1,000 ppm |
| 4 | 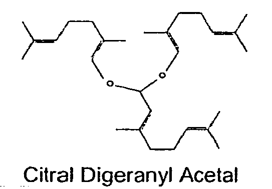 | 2g | 100 | 1,000 ppm |
| 5 | 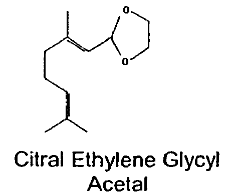 | 3.3g | 100 | 1,000 ppm |
| 6 | 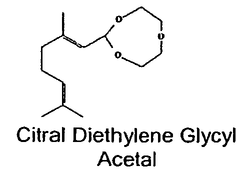 | 2g | 100 | 1,000 ppm |
| 7 | 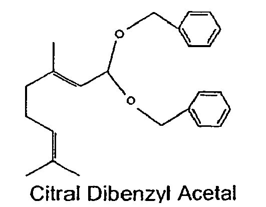 | 3.3g | 100 | 1,000 ppm |
| 8 | 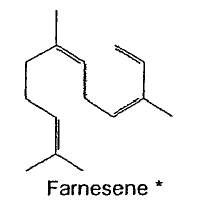 | 2 g | 100 | 1,000 ppm |
| 9 | 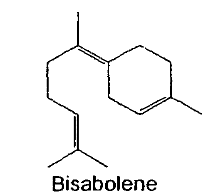 | 2 g | 100 | 1,000 ppm |
| 10 | 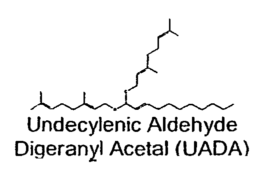 | 10 mL | -- | 0.2 g |
| 11 | 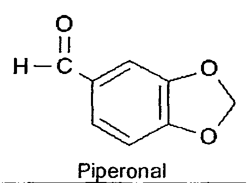 | 89 | 100 | 1,000 ppm |
| 12 | CH₃(CH₂)₆CH₂CH=CHCH₂(CH₂)₆CH₂NH₂ Oleylamine | 12.3 mL | 100 | 1,000 ppm |
| 13 | 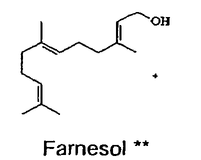 | 2 g | 100 | 1,000 ppm |
| 14 | 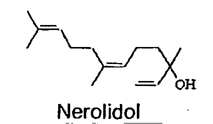 | 2 g | 100 | 1,000 ppm |
| 15 | 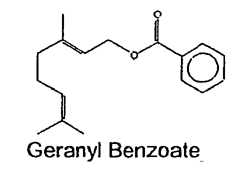 | 2 g | 100 | 1,000 ppm |
| 16 | 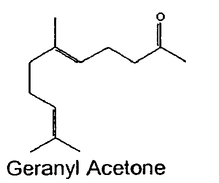 | 2 g | 100 | 1,000 ppm |
| 17 | 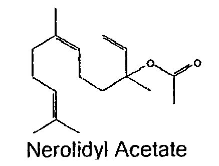 | 2 g | 100 | 1,000 ppm |
| 18 | 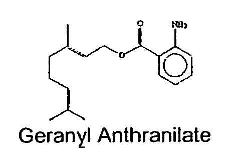 | 2 g | 100 | 1,000 ppm |
| 19 | 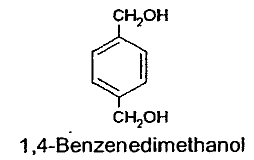 | 5 g | 50 | 1,000 ppm |
| 20 | 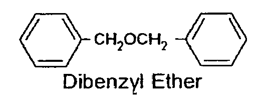 | 3.2 | 50 | 1,000 ppm |
| 21 | 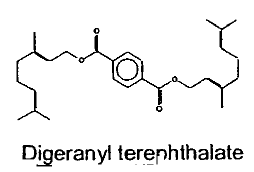 | 3.2 g | 100 | 1,000 ppm |
| 22 | 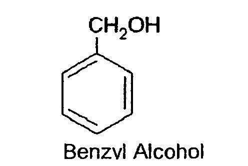 | 3.2 g | 50 | 1,000 ppm |

| | | | | |
|---|---|---|---|---|
| * Also contained isomers of structure shown ** Mixture of e,e- ; z,e- ; and e,z-Farnesol | | | | |

**Table B - Headspace Oxygen Measurements (Liquids)**

| **Example No.** | **Oxygen Content (O₂ %)** | | | | | | **Test Duration (days)** |
|---|---|---|---|---|---|---|---|
| | **Initial** | **Day 7** | **Day 14** | **Day 21** | **Day 50** | **Final** | |
| 1 | 20.7 | - | - | - | - | 8.8 | 3 |
| 2 | 21.3 | 1.9 | - | - | - | 1.8 | 54 |
| 3 | 20.8 | 18.0 | 17.7 | - | 16 | 15.7 | 76 |
| 4 | 20.8 | 20.3 | 20.2 | - | 9 | 2.9 | 70 |
| 5 | 21.7 | 21.4 | 21.2 | 21.0 | - | 12.3 | 106 |
| 6 | 21.7 | 16.0 | 12.0 | 8.0 | 2.8 | 0.9 | 91 |
| 7 | 20.5 | 0 | - | - | - | 0 | 15 |
| 8 | 20.7 | 9.2 | 4.9 | 2.5 | - | 2.4 | 63 |
| 9 | 20.7 | 19.3 | 8.5 | 3.1 | - | 0.2 | 63 |
| 10 | 20.7 | - | - | - | - | 10.5 | 3 |
| 11 | 21.3 | 21.1 | - | - | - | 21.3 | 54 |
| 12 | 21.3 | 21.2 | - | - | - | 21.2 | 54 |
| 13 | 20.7 | 20.7 | 20.7 | 20.7 | - | 20.7 | 63 |
| 14 | 20.7 | 20.7 | 20.7 | 20.7 | - | 20.7 | 63 |
| 15 | 20.7 | 20.7 | 20.7 | 20.7 | - | 20.7 | 63 |
| 16 | 20.7 | 20.7 | 20.7 | 20.7 | - | 20.7 | 63 |
| 17 | 20.7 | 20.7 | 20.7 | 20.7 | - | 20.7 | 63 |
| 18 | 20.7 | 20.7 | 20.7 | 20.7 | - | 20.7 | 63 |
| 19 | 20.1 | - | - | 20.2 | 20.2 | 20.2 | 753 |
| 20 | 20.3 | 20.3 | 20.2 | - | - | 20.2 | 63 |
| 21 | 20.5 | 20.5 | 20.2 | - | - | 20.2 | 63 |
| 22 | 20.3 | 20.3 | 20.2 | - | 20.2 | 20.2 | 739 |

### Examples 23-46 : Testing Of Compounds As Additives In Host Polymers

Geraniol and a selection of compounds that provided a decrease in headspace oxygen content in the liquid screening analysis were separately mixed into host polymers, together with cobalt neodecanoate. The resulting compounded polymers were formed into pellets or plaques. These polymers were separately subjected to the solids screening test, as described above, using a total mass of the polymer of 150 grams. The containers used for the test were identical to those used for the liquid screening. The compositions of the examples are given in Table C, and the measured oxygen content over time is shown in Table D.

| Table C - Compositions For Solids Screening Test | | | | | |
|---|---|---|---|---|---|
| Example No. | Compound | Loading | Host Polymer | Cobalt Neodecanoate (ppm) | Form |
| 23 | Citral Dicumylphenyl Acetal | 1.65% | PET | 500 | Pellets |
| 24 | | | | 1,000 | |
| 25 | | | | 1,500 | |
| 26 | | | | 2,500 | |
| 27 | Citral Digeranyl Acetal | 0.44% | PET | 500 | Pellets |
| 28 | | | | 1,000 | |
| 29 | | | | 1,500 | |
| 30 | | | | 2,500 | |
| 31 | Citral Dibenzyl Acetal | 1.04% | PET | 500 | Pellets |
| 32 | | | | 1,000 | |
| 33 | | | | 1,500 | |
| 34 | | | | 2,500 | |
| 35 | Citral Dicumylphenyl Acetal | 1.65% | EVOH | 2,500 | Pellets |
| 36 | | | LDPE | | |
| 37 | Citral Digeranyl Acetal | 0.44% | EVOH | 2,500 | Pellets |
| 38 | | | LDPE | | |
| 39 | Citral Dibenzyl Acetal | 1.04% | EVOH | 2,500 | Pellets |
| 40 | | | LDPE | 5,000 | |
| 41 | Geraniol | 0.46% | EVOH | 2,500 | Pellets |
| 42 | | | LDPE | 5,000 | |
| 43 | Farmesene | 0.25% | PET | 2,500 | Plaques |
| 44 | Bisabolene | 0.50% | EMAC | 2,500 | Plaques |
| 45 | Citral | 2.0% | EMAC | 2,500 | Plaques |
| 46 | UADA | 2.0% | EMAC | 2,500 | Plaques |

**Table D - Headspace Oxygen Measurements (Solids)**

| **Example No.** | **Oxygen Content (O₂ %)** | | | | | | **Test Duration (days)** |
|---|---|---|---|---|---|---|---|
| | **Initial** | **Day 7** | **Day 14** | **Day 21** | **Day 50** | **Final** | |
| 23 | 20.8 | 20.1 | 18.9 | 18.5 | - | 15.4 | 167 |
| 24 | 20.8 | 19.7 | 18.8 | 18.4 | - | 14.0 | 167 |
| 25 | 20.8 | 19.6 | 18.7 | 18.3 | - | 12.1 | 167 |
| 26 | 20.8 | 19.3 | 18.9 | 17.7 | 17.6 | 11.9 | 217 |
| 27 | 20.8 | 20.3 | 20.2 | 20.1 | - | 18.7 | 167 |
| 28 | 20.8 | 20.3 | 20.0 | 19.5 | - | 14.6 | 167 |
| 29 | 20.8 | 20.1 | 19.6 | 18.9 | - | 13.2 | 167 |
| 30 | 20.8 | 19.7 | 18.6 | 16.3 | 16.4 | 7.0 | 217 |
| 31 | 20.8 | 20.4 | 20.3 | - | - | 19.5 | 167 |
| 32 | 20.8 | 20.2 | 19.9 | - | - | 18.4 | 167 |
| 33 | 20.8 | 20.2 | 19.9 | - | - | 17.3 | 167 |
| 34 | 20.8 | 20.5 | 20.3 | 20.0 | 19.9 | 17.6 | 250 |
| 35 | 20.8 | 20.7 | 20.7 | 19.9 | 20.3 | 19.2 | 217 |
| 36 | 20.8 | 15.4 | 13.9 | 4.0 | 7.2 | 2.9 | 69 |
| 37 | 20.8 | 20.8 | 20.8 | 20.1 | 20.6 | 20.3 | 217 |
| 38 | 20.8 | 2.1 | 0.0 | 0.0 | 0.0 | 0.0 | 216 |
| 39 | 20.8 | 20.7 | 20.6 | 20.6 | 20.6 | 20.0 | 250 |
| 40 | 20.8 | 20.8 | 0.8 | 0.6 | 0.0 | 0.0 | 102 |
| 41 | 20.8 | 20.8 | 20.8 | 20.8 | 20.7 | 20.6 | 102 |
| 42 | 20.8 | 20.6 | 20.5 | 20.3 | 20.0 | 0.6 | 70 |
| 43 | 20.5 | 19.7 | 19.5 | 19.4 | 19.4 | 19.2 | 345 |
| 44 | 20.7 | 20.1 | 20.1 | 20.1 | - | 19.8 | 279 |
| 45 | 20.7 | 18.8 | 18.1 | 12.1 | 3.99 | 1.4 | 56 |
| 46 | 20.7 | 20.5 | - | - | - | 20.1 | 204 |

### Example 47 : Multilayer Polyolefin Bottle

A multilayer bottle having an internal volume of 8 ounces was prepared by coextrusion blow molding using conventional equipment technology on a 4-material-6-layer unit cavity machine designed by R & B Tool (Saline, MI). Coextrusion of the components of the bottle provided a parison having a multilayer structure of:
HDPE-1 | HDPE-2 | adhesive | EVOH | adhesive | HDPE-3.
The layered parison containing was subsequently blow molded into the 8-ounce bottle. The high density polyethylene layer noted HDPE-1 was on the interior of the bottle, i.e. in contact with any contents of the package. All three HDPE layers in this case were virgin HDPE. It is possible to use either HDPE that has been recycled (i.e. post-consumer) or has been trimmed from HDPE based products (i.e. "regrind"). The adhesive layers in this case were each maleic anhydride modified polyethylene, although any suitable adhesive could be used. Since this bottle did not contain an additive compound of the present invention, it served as a control for the oxygen barrier analysis.

After the bottle was formed by blow molding, the package was filled with nitrogen-purged water and was induction foil sealed with an aluminum-foil based seal. The filled and sealed bottle was stored at ambient conditions of 72 °F and 50% relative humidity.

### Examples 48-51 : Multilayer Polyolefin Bottles Containing Active

### Composition Layer

Multilayer bottles were prepared as described in Example 47, except that the EVOH layer was an active layer, containing 2500 ppm cobalt(II)neodecanoate and an additive compound of the present invention. In a previous step, the cobalt(II)neodecanoate was added to EVOH (EVALCA F101) at a concentration of 5,000 ppm and melt compounded in a twin-screw extruder. The extrudate was pelletized to serve as a masterbatch. This material was physically mixed with virgin EVOH (EVALCA F101) in a 1:1 ratio to provide EVOH having an overall cobalt(II)neodecanoate concentration of 2500 ppm. This blend was then thoroughly dried. The additive compound was added as a liquid to the blend at the feed throat area of an extruder, and this area was blanketed with dry nitrogen. The extrudate of EVOH containing cobalt(II)neodecanoate and the additive compound was then formed into a layer in a parison, together with the layers of HDPE and adhesive as shown for Example 47, and subsequently blown into the shape of the container.

For Example 48, the additive compound was citral dibenzyl acetal (CDBA) at a level of 0.125 wt% in the EVOH. For Example 49, the additive compound was citral digeranyl acetal (CDGA) at a level of 0.0625 wt% in the EVOH. For Example 50, the additive compound was citral at a level of 0.1 wt% in the EVOH. For Example 51, the additive compound was citral at a level of 0.2 wt% in the EVOH.

After the bottles were formed by blow molding, each package was filled with nitrogen-purged water and was induction foil sealed with an aluminum-foil based seal. The filled and sealed bottles were stored at ambient conditions of 72 °F and 50% relative humidity.

### Example 52 : Analysis of Oxygen Content of Multilayer Polyolefin Bottles

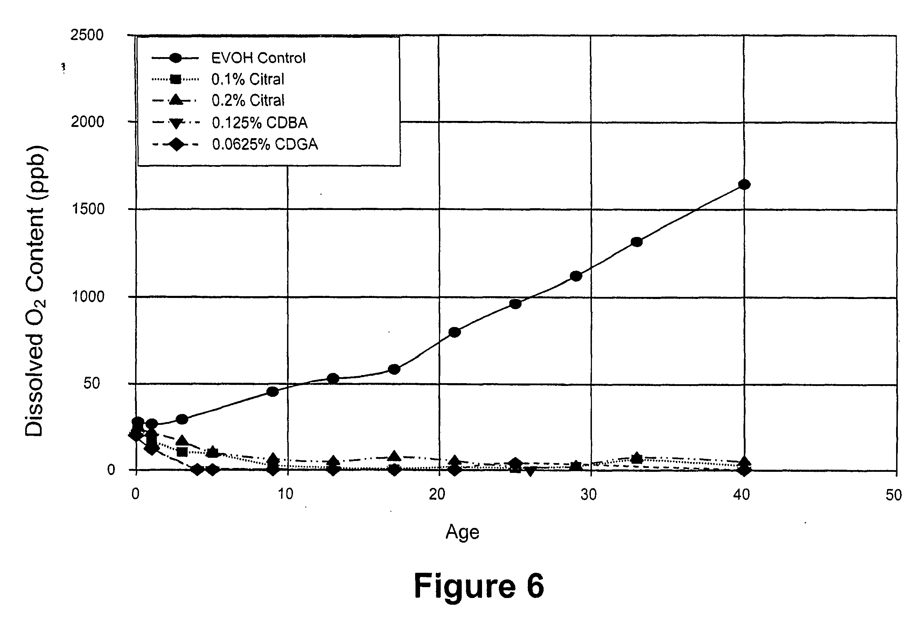

The water in the filled and sealed multilayer polyolefin bottles of Examples 47-51 was analyzed for dissolved oxygen content over time. The oxygen in the water was measured with an ORBISPHERE 3600 instrument. Figure 6 is a graph of the dissolved oxygen content as a function of time for each type of package. The dissolved oxygen in the control bottle containing EVOH without a compound of the present invention (Example 47) began to increase after about 3 weeks storage. After 17 weeks, this same bottle had a higher dissolved oxygen content than it had upon filling and sealing, and the oxygen content continued to increase steadily until at least 40 weeks storage. In contrast, the bottles containing an active composition of EVOH with cobalt(II)neodecanoate and a compound of the present invention showed reductions of dissolved oxygen that were maintained for at least 40 weeks. Each of these bottles had at least one measurement of dissolved oxygen content that was undetectable.

### Examples 53 - 56 : Multilayer PET Bottles Containing Active Composition Layer

Multilayer preforms were prepared by sequential co-injection using a HUSKY 225 injection molding machine. Co-injection molding of the components provided a preform having a multilayer structure of:

### PET | EMAC | PET | EMAC | PET

The layered preform was then blow molded on a SIDEL SBO-1 into the 16-ounce bottle. The PET layers were virgin PET (M&G 8006), and the intermediate layers of poly(ethylene-co-methyl acrylate) were EMAC 2207 (EASTMAN). The EMAC layers accounted for only 2% of the weight of the package. After a bottle was formed by blow molding, the package was filled with nitrogen-purged water and was induction foil sealed with an aluminum-foil based seal. An identical package was filled with tap water and was induction foil sealed with an aluminum-foil based seal. Both types of filled and sealed bottles were stored at ambient conditions of 72 °F and 50% relative humidity.

The EMAC layers were active compositions, containing 2500 ppm cobalt(II)neodecanoate and an additive compound of the present invention. The cobalt(II)neodecanoate was added to EMAC at a concentration of 10,000 ppm in a twin-screw extruder. This material was physically mixed with virgin EMAC to provide EMAC having an overall cobalt(II)neodecanoate concentration of 2500 ppm. This composition was then thoroughly dried. The additive compound was added as a liquid to the EMAC at the feed throat area of an extruder, and this area was blanketed with dry nitrogen. The melt of EMAC containing cobalt(II)neodecanoate and the additive compound was then sequentially co-injected with PET to form the layered preform structure.

For Example 53, the additive compound was citral at a level of 3.0 wt% in the EMAC. For Example 54, the additive compound was citral diethyl acetal (CDEA) at a level of 3.0 wt% in the EMAC. For Example 55, the additive compound was citral dimethyl acetal (CDMA) at a level of 3.0 wt% in the EMAC. For Example 56, the additive compound was undecylenic aldehyde digeranyl acetal (UADA) at a level of 2.5 wt% in the EMAC.

### Example 57 : Analysis of Oxygen Content of PET Bottles

The water in the filled and sealed multilayer PET bottles of Examples 53 - 56 was analyzed for dissolved oxygen content over time. A bottle made using the process of Examples 53-56, but with no cobalt and no additive compound, was used as a control. The control bottle was also filled with nitrogen-purged water and induction foil sealed with an aluminum-foil based seal. The oxygen in the water was measured with an ORBISPHERE 3600 instrument.

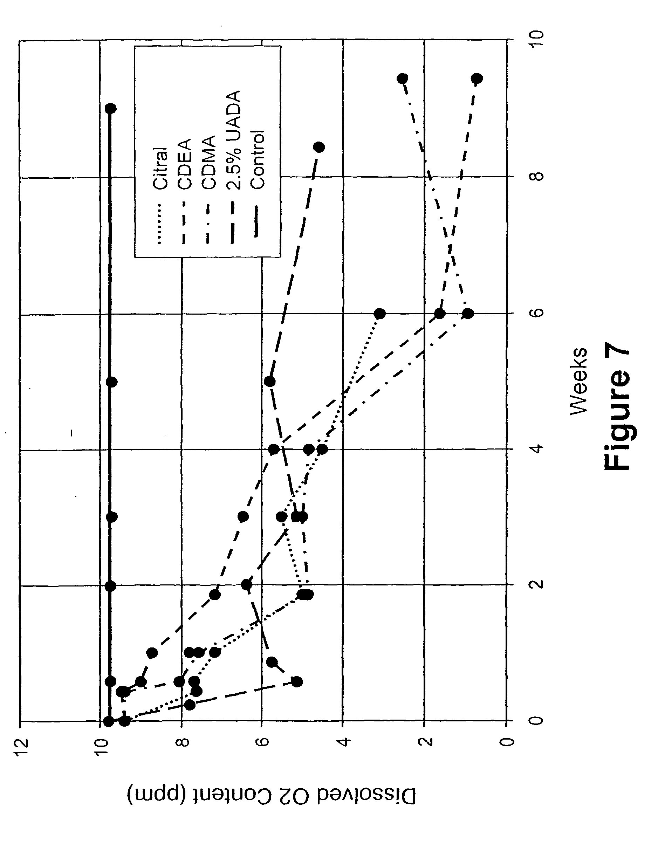

Figure 7 is a graph of the dissolved oxygen content in tap water as a function of time for each type of package. The dissolved oxygen in the control bottle remained stable for at least 9 weeks. In contrast, the multilayer bottles containing an active composition of EMAC with cobalt(II)neodecanoate and a compound of the present invention showed reductions of dissolved oxygen over this same period. These graphs illustrate the relative abilities of these bottles to reduce the existing oxygen content of a sealed container.

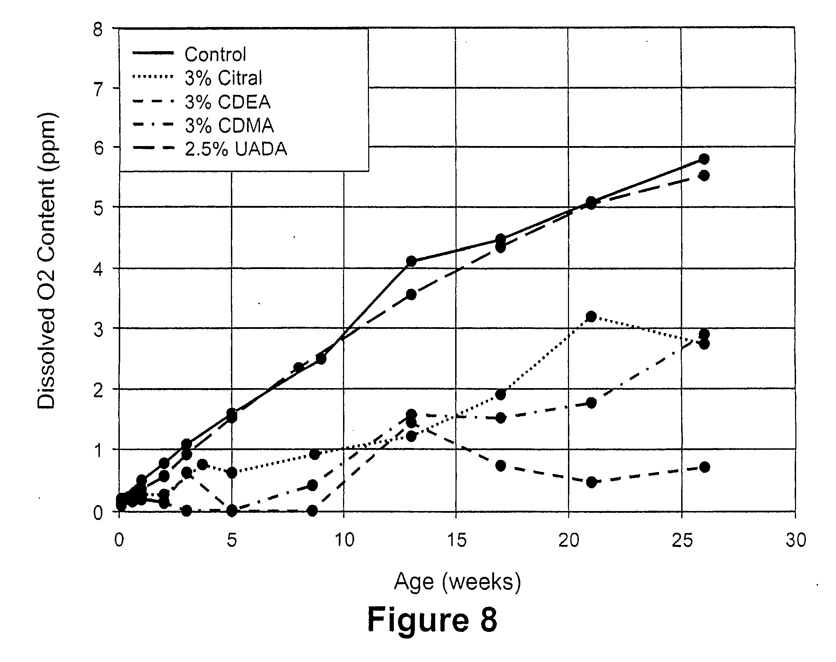

Figure 8 is a graph of the dissolved oxygen content in nitrogen-purged water as a function of time for each type of package. The dissolved oxygen in the control bottle increased steadily for at least 26 weeks, reaching a concentration greater than 5 ppm. This was also observed for the multilayer bottle containing UADA as the additive compound. For the bottles containing UADA, it is believed that the relatively high rate of oxygen ingress may have been due to the extreme oxygen concentration gradient, which may have overwhelmed the effect of the interaction of the compound with molecular oxygen. The other multilayer bottles containing an additive compound of the present invention showed increases in dissolved oxygen content to only 3 ppm. The lowest increase in dissolved oxygen was exhibited by the multilayer bottle containing CDEA as the additive compound. These graphs illustrate the relative abilities of these bottles to block the ingress of oxygen into the container.

## Claims

1. An oxygen barrier composition, comprising:
a polymer;
a metal-,
and a compound comprising structure (II) 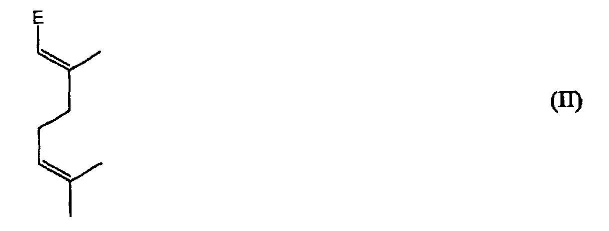 wherein -E is selected from the group consisting of -C(=O)H, -CH₂R¹, and -CHR¹R²;
wherein R¹ is -Q-R³-R⁴ or -O-R⁴, such that R¹ comprises at least 2 carbon atoms and does not contains a carbonyl group, and R³ and R⁴ are independently selected from the group consisting of alkyl, alkenyl, alkynyl, heteroalkyl, aryl and heterocyclic;
R² is -Q-R⁵-R⁶ or -O-R⁶, such that R² comprises at least 2 carbon atoms and does not contain a carbonyl group, and R⁵ and R⁶ are independently selected from the group consisting of alkyl, alkenyl, alkynyl, heteroalkyl, aryl and heterocyclic;
or R¹ and R², together with the atoms to which they are bonded, form a ring comprising from 5 to 20 ring atoms.

2. A multi-phase polymeric composition, comprising:
a first phase comprising a first polymer; and
a second phase, comprising a second polymer, a metal, and a compound comprising structure (I) 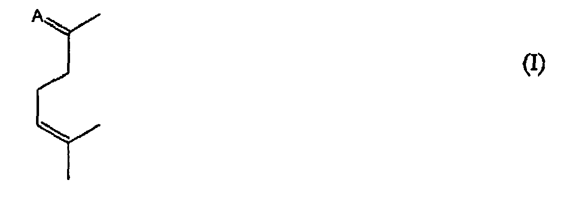 wherein =A is selected from the group consisting of an alkenyl group of from 3 to 20 carbon atoms, a cycloalkenyl group of from 5 to 20 carbon atoms, and a group comprising the structure =CH-E;
wherein -E is selected from the group consisting of -CH₂OH, -CH(OH)₂,-C(=O)H, -CH₂R¹ and -CHR¹R²;
wherein R¹ is -O-R³-R⁴ or -O-R⁴, where R³ and R⁴ do not contain a carbonyl group and are independently selected from the group consisting of alkyl, alkenyl, alkynyl, heteroalkyl, aryl and heterocyclic;
R² is -O-R⁵-R⁶ or -O-R⁶, where R⁵ and R⁶ do not contain a carbonyl group and are independently selected from the group consisting of alkyl, alkenyl, alkynyl, heteroalkyl, aryl and heterocyclic; or
R¹ and R², together with the atoms to which they are bonded, form a ring comprising from 5 to 20 ring atoms.

3. The composition of claim 1, wherein -E is -CHR¹(-O-R⁶), and R⁶ is selected from the group consisting of an alkyl group comprising from 2 to 20 carbon atoms and an alkenyl group comprising from 2 to 20 atoms.

4. The multi-phase composition of claim 2, wherein =A is =CH-CHR¹ (-O-R⁶), and R⁶ is selected from the group consisting of an alkyl group comprising from 1 to 20 carbon atoms and an alkenyl group comprising from 2 to 20 atoms.

5. The composition of any of claims 3 and 4, wherein R⁶ is an alkenyl group comprising from 4 to 20 atoms and at least 2 carbon-carbon double bonds.

6. The composition of claim 1, wherein -E is -CHR(-O-R⁵-R⁶), and R⁵ is selected from the group consisting of an alkyl group comprising from 1 to 20 carbon atoms, an alkenyl group comprising zoom 2 to 20 atoms, and an aryl group comprising from 5 to 20 carbon atoms.

7. The multi-phase composition of claim 2, wherein =A is =CH-CHR¹(-O-R⁵-R⁶), and R⁵ is selected from the groups consisting of an alkyl group comprising from 1 to 20 carbon atoms, an alkenyl group comprising from 2 to 20 atoms, and an aryl group comprising from 5 to 20 carbon atoms.

8. The composition of any of claims 6 and 7, wherein R⁶ is selected from the group consisting of an alkyl group comprising from 1 to 20 carbon atoms, an alkenyl group comprising from 2 to 20 atoms, and an aryl group comprising from 5 to 20 carbon atoms.

9. The composition of any of claims 6 and 7, wherein R⁵ is an alkyl group comprising from 1 to 20 carbon atoms, and R⁶ is an aryl group comprising from 5 to 20 carbon atoms.

10. The composition of any of claims 6 and 7, wherein R⁵ is an aryl group comprising from 5 to 20 carbon atoms, and R⁶ is an aryl group comprising from 5 to 20 carbon atoms.

11. The composition of claim 1, wherein -E is -CH²(-O-R⁴), and R⁴ is selected from the group consisting of an alkyl group comprising from 2 to 20 carbon atoms and an alkenyl group comprising from 2 to 20 atoms.

12. The multi-phase composition of claim 2, wherein =A is =CH-CH²(-O-R⁴), and R⁴ is selected from the group consisting of an alkyl group comprising from 1 to 20 carbon atoms and an alkenyl group comprising from 2 to 20 atoms.

13. The composition of any of claims 11 and 12, wherein R⁴ is an alkenyl group comprising from 4 to 20 atoms and at least 2 carbon-carbon double bonds.

14. The composition of claim 1, wherein -E is -CH²(-O-R³-R⁴), and R³ is selected from the group consisting of an alkyl group comprising from 1 to 20 carbon atoms, an alkenyl group comprising from 2 to 20 atoms, and an aryl group comprising from 5 to 20 carbon atoms.

15. The multi-phase composition of claim 2, wherein =A is =CH-CH²(-O-R³-R⁴), and R³ is selected from the group consisting of an alkyl group comprising from 1 to 20 carbon atoms, an alkenyl group comprising from 2 to 20 atoms, and an aryl group comprising from 5 to 20 carbon atoms.

16. The composition of any of claims 14 and 15, wherein R⁴ is selected from the group consisting of an alkyl group comprising from 1 to 20 carbon atoms, an alkenyl group comprising from 2 to 20 atoms, and an aryl group comprising from 5 to 20 carbon atoms.

17. The composition of any of claims 14 and 15, wherein R³ is an alkyl group comprising from 1 to 20 carbon atoms, and R⁴ is an aryl group comprising from 5 to 20 carbon atoms.

18. The composition of any of claims 13 and 14, wherein R³ is an aryl group comprising from 5 to 20 carbon atoms, and R⁴ is an aryl group comprising from 5 to 20 carbon atoms.

19. The composition of any of claims 1 and 2, wherein R¹ and R² together with the atoms to which they are bonded form a ring selected from the group consisting of cycloalkyl, cycloalkenyl, aryl and heterocyclic.

20. The composition of claim 19, wherein R¹ and R² together comprise from 1 to 5 oxygen atoms.

21. The composition of claim 20, wherein R¹ and R² together comprise from 2 to 9 carbon atoms.

22. The composition of claim 1, wherein the polymer is selected from the group consisting of a polyolefin, a polyacrylate, a polyester, a chlorinated polymer, a styrenic polymer, an ionomer, and a polycarbonate.

23. The composition of claim 22, wherein the polymer comprises a polyolefin selected from the group consisting of polyethylene, polypropylene, poly(vinyl alcohol), and copolymers and blends thereof.

24. The composition of claim 22, wherein the polymer comprises a polyacrylate selected from the group consisting of poly(methyl acrylate), poly(methyl methacrylate), poly(ethyl acrylate), poly(ethyl methacrylate), and copolymers and blends thereof.

25. The composition of claim 22, wherein the polymer comprises a chlorinated polymer selected from the group consisting of poly(vinyl chloride), poly(vinylidene chloride) and copolymers and blends thereof.

26. The composition of claim 22, wherein the polymer comprises a polyester selected from the group consisting of poly(ethyleneterephthalate), poly(butylene terephthalate), poly(ethylene naphthalate), poly(lactic acid), poly(glycolic acid), and copolymers and blends thereof.

27. The composition of any preceding claim, wherein the concentration of the compound in the composition when appendant on claim 1 or the second phase when appendant on claim 2, is from 0.001 weight percent to 5 weight percent.

28. The composition of claim 27, wherein the concentration of the compound is from 0.01 weight percent to 4 weight percent.

29. The composition of claim 28, wherein the concentration of the compound is from 0.05 weight percent to 3 weight percent.

30. The composition of any preceding claim, wherein the metal comprises a transition metal.

31. The composition of claim 30, wherein the metal is selected from the group consisting of iron, cobalt, nickel, ruthenium, rhodium, palladium, osmium, iridium, platinum, copper, manganese and zinc.

32. The composition of claim 31, wherein the metal is cobalt.

33. The composition of any of claims 1 and 2, wherein the metal is present as a complex.

34. The composition of claim 33, wherein the metal is present as a complex selected from the group consisting of cabalt(II)2-ethylhexanoate, cobalt(II)neodecanoate, cobalt (II) acetate, and cobalt (II) oleate.

35. The composition of any preceding claim, wherein a concentration of the metal in the composition when appendant on claim 1, or the second phase when appendant on claim 2, is from 30 parts per million to 5,000 parts per million.

36. The composition of claim 35, wherein the concentration of the metal is from 200 parts per million to 2,500 parts per million.

37. The composition of claim 1, wherein -E is -CHR¹R², and R¹ and R² are independently selected from the group consisting of -OCH₂CH₃; -OCH₂-C₆H₅; -OCH=C(CH₃)(CH₂)₂CH=C(CH₃)₂; -OC₆H₄-C(CH₃)₂-C₆H₅; and -OCH(CH=CH (CH₂)₇CH₃)-(OCH₂CH=C(CH₃)(CH₂)₂CH=C(CH₃)₂.

38. The composition of claim 1, -E is -CH₂R¹, and R₁ is selected from the group consisting of -OCH₂CH₃; -OCH₂-C₆H₅; -OCH=C(CH₃) (CH₂)₂CH=C(CH₃)₂; -OC₆H₄-C (CH₃)₂-C₆H₅; and -OCH(CH=CH(CH₂)₇CH₃)-(OCH₂CH=C(CH₃) (CH₂)₂CH=C(CH₃)₂.

39. The composition of any of claims 1 and 2, wherein the compound comprises a member selected from the group consisting of citral, citral diethyl acetal, citral digeranyl acetal, undecylenic aldehyde digeranyl acetal, citral ethylene glycyl acetal, citral diethylene glycyl acetal, citral dibenzyl acetal, and citral dicumylphenyl acetal.

40. The composition of any of claims 1 and 2, wherein the compound comprises a member selected from the group consisting of citral, citral digeranyl acetal, citral ethylene glycyl acetal, citral diethylene glycyl acetal, citral dibenzyl acetal, and citral dicumylphenyl acetal.

41. The multi-phase composition of claim 26, wherein =A is an alkenyl group comprising from 3 to 20 carbon atoms.

42. The multi-phase composition of claim 41, wherein =A is an alkenyl group comprising from 4 to 20 carbon atoms and at least 2 carbon-carbon double bonds.

43. The multi-phase composition of claim 2, wherein =A is a cycloalkenyl group comprising from 5 to 20 carbon atoms.

44. The multi-phase composition of claim 26, wherein =A is =CH-CHR¹R², and R¹ and R² are independently selected from the group consisting of -OCH₃; -OCH₂CH₃; -OCH₂-C₆H₅; -OC₆H₂-C(CH₃)₂-C₆H₅; -OCH(CH=CH(CH₂)₇CH₃)-(OCH₂CH=C(CH₃)(CH₂)CH=C(CH₃)₂; and-OCH=C(CH₃)(CH₂)₂CH=C(CH₃)₂.

45. The multi-phase composition of claim 2, wherein =A is =CH-CH₂R¹, and R¹ is selected from the group consisting of -OCH₃; -OCH₂CH₃; -OCH₂-C₆H₅; -OCH=C(CH₃) (CH₂)₂CH=(CH₃)₂; -OCH(CH=CH(CH₂)₇CH₃)-(OCH₂CH=C(CH₃)(CH₂)₂CH=C(CH₃)₂; and -OC₆H₄-C(CH₃)₂-C₆H₅.

46. The multi-phase composition of claim 2, wherein the compound comprises a member selected from the group consisting of citral, geraniol, citral dimethyl acetal, citral dimethyl acetal, citral digeranyl acetal, undecylenic aldehyde digeranyl acetal, citral ethylene glycyl acetal, citral diethylene glycyl acetal, citral dibenzyl acetal, citral dicumylphenyl acetal, farnesene and bisabolene.

47. The multi-phase composition of claim 2, wherein at least one of the first and second polymers is selected from the group consisting of a polyolefin, a polyacrylate, a polyester, a chlorinated polymer, a styrenic polymer, an monomer, and a polycarbonate.

48. The multi-phase composition of claim 47, wherein at least one of the first and second polymers comprises a polyolefin selected from the group consisting of polyethylene, polypropylene, poly(vinyl alcohol), and copolymers and blends thereof.

49. The multi-phase composition of claim 47, wherein at least one of the first and second polymers comprises a polyacrylate selected from the group consisting of poly (methyl acrylate), poly(methyl methacrylate), poly(ethyl acrylate), poly(ethyl methacrylate), and copolymers and blends thereof.

50. The multi-phase composition of claim 47, wherein at least one of the first and second polymers comprises a chlorinated polymer selected from the group consisting of poly(vinyl chloride), poly(vinylidene chloride) and copolymers and blends thereof.

51. The multi-phase composition of claim 47, wherein at least one of the first and second polymers comprises a polyester selected from the group consisting of poly(ethylene terephthalate), poly(butylene terephthalate), poly(ethylene naphthalate), poly(lactic acid), polyv(glycolic acid), and copolymers and blends thereof.

52. The multi-phase composition of claim 2, wherein the multi-phase composition is a blend, and the first polymer is different from the second polymer.

53. The multi-phase composition of claim 52, wherein the multi-phase composition is selected from a closure liner, a sealant and a gasket.

54. The multi-phase composition of claim 2, wherein the first phase and the second phase are configured as layers.

55. A wall for a package, comprising the composition of claim 2 or any one of claims 22 to 26, 31 to 34, 39, 40 and 46 to 51 when dependent on claim 2.

56. The wall of claim 55, wherein the first phase and the second phase are present as a blend, and the first polymer is different from the second polymer.

57. The wall of claim 55, wherein the first phase and the second phase are configured as layers.

58. The wall of claim 57, further comprising a third phase comprising a third polymer selected from the group consisting of a polyolefin, a polyacrylate, a polyester, a chlorinated polymer, a styrenic polymer, an ionomer, and a polycarbonate; wherein the first, second and third phases are configured as layers.

59. The wall of claim 58, further comprising a fourth phase comprising a fourth polymer selected from the group consisting of a polyolefin, a polyacrylate, a polyester, a chlorinated polymer, a styrenic polymer, an ionomer, and a polycarbonate; wherein the first, second, third and fourth phases are configured as layers.

60. The wall of claim 59, further comprising a fifth phase comprising a fifth polymer selected from the goup consisting of a polyolefin, a polyacrylate, a polyester, a chlorinated polymer, a styrenic polymer, an ionomer, and a polycarbonate; wherein the first, second, third, fourth and fifth phases are configured as layers.

61. The wall of claim 57, further comprising at least one adhesive layer.

62. The wall of claim 57, further comprising a barrier layer comprising a banter polymer.

63. The wall of claim 55, wherein the package is selected from a bottle, a sheet of material, a bag, a tray, a preform, a liner or a portion of a closure.

64. A method of making an oxygen barrier composition, comprising the composition of claim 1 or any one of claims 22 to 26, 34 and 39 when dependent on claim 1, the method comprising combining the polymer, the metal and the compound.

65. The method of claim 64, wherein the combining comprises combining the metal and the compound with the polymer in an extruder.

66. The method of claim 64, wherein the combining comprises mixing the metal, the compound and the polymer in a solvent to form a liquid mixture, and depositing the liquid mixture onto a substrate.

67. The method of claim 66, wherein the depositing comprises casting the liquid mixture and evaporating the solvent,

68. The method of claim 66, wherein the depositing comprises spraying.

69. The method of claim 64, wherein the compound is combined with the polymer at a concentration of from 0.001 wight percent to 5 weight percent.

70. The method of claim 64, wherein the metal is combined with the polymer at a concentration of from 30 parts per million to 5, 000 parts per million.

71. A method of making a package having oxygen barrier properties, comprising:
forming a multi-phase composition according to claim 1 or any one of claims 27, 31, 34, 35, 39, 40 and 44 to 46 when dependent on claim 2.

72. The method of claim 71, wherein the forming comprises co-extruding the first polymer and the second phase.

73. The method of claim 72, wherein the multi-phase composition is a blend.

74. The method of claim 71, wherein the forming comprises coating a layer of the first phase with the second phase.

75. The method of claim 71, wherein the forming comprises forming a second phase melt by heating the second polymer, the metal and the compound;
injecting a melt of the first polymer into a mold; and
injecting the second phase melt into the mold to form a multi-layer structure.

76. The method of claim 71, wherein the forming comprises forming a first polymer melt by heating the first polymer; forming a second phase melt by heating the second polymer, the metal and the compound; and simultaneously injecting the first polymer melt and the second phase melt into a mold to form a multi-layer structure.

77. The method of any of claims 75 and 76, wherein the multi-layer structure comprises a preform.

78. The method of claim 77, wherein the processing comprises blow molding the preform into the shape of a container.

79. The method of claim 75, further comprising injecting a melt of a third polymer into the mold.

80. The method of claim 76, wherein the multilayer structure comprises a parison.

81. The method of claim 80, wherein the processing comprises enclosing the parison in a blow mold and inflating the parison into the shape of the blow mold.

82. The method of claim 71, wherein the multi-phase composition further comprises a third phase comprising a third polymer, and the forming comprises:
forming a first polymer melt by heating the first polymer;
forming a second phase melt by heating the second polymer, the metal and the compound;
forming a third polymer melt by heating the third polymer; and
simultaneously injecting the first polymer melt, the second phase melt, and the third polymer melt into a mold to form a multi-layer structure.

83. The method of claim 82, wherein the multi-phase composition further comprises a fourth phase comprising a fourth polymer, and the forming-further comprises forming a fourth polymer melt by heating the fourth polymer, and simultaneously injecting the fourth polymer melt with the first polymer melt, the second phase melt, and the third polymer melt into a mold to form a multi-layer structure.

84. The method of claim 71, wherein the package is selected from a bottle, a sheet of material, a bag and a tray.

85. The method of claim 71, wherein the first polymer and second polymer are independently selected from the group consisting of a polyolefin, a polyacrylate, a polyester, a chlorinated polymer, a styrenic polymer, an ionomer, and a polycarbonate.

86. The method of claim 71, wherein the multi-phase composition comprises the first phase and the second phase configured as layers, and further comprises a layer of a third phase.

87. The method of claim 86, wherein the multi-phase composition further comprises a layer of a fourth phase.

88. The method of claim 86, wherein the multilayer structure further comprises at least one adhesive layer.

89. The method of claim 86, wherein the multilayer structure further comprises a barrier layer comprising a barrier polymer.

90. A method of reducing the oxygen content of a substance, comprising: sealing the substance in a package, the package comprising a polymer, a metal, and a compound comprising structure (II) 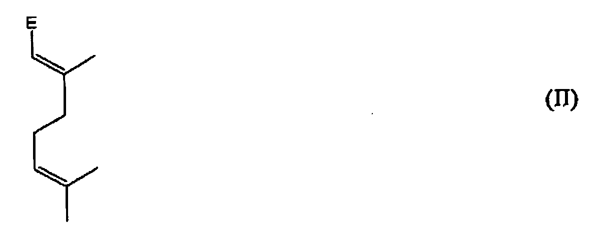 wherein -E is selected from the group consisting of -C(=O)H, -CH₂R¹, and - CHR¹R²;
wherein R¹ is -O-R³-R⁴ or -O-R⁴, such that R¹ comprises at least 2 carbon atoms and does not contain a carbonyl group, and R³ and R⁴ are independently selected from the group consisting of alkyl, al kenyl, alkynyl, heteroalkyl, aryl and heterocyclic;
R² is -O-R⁵-R⁶ or -O-R⁶, such that R² comprises at least 2 carbon atoms and does not contain a carbonyl group, and R⁵ and R⁶ are independently selected from the group consisting of alkyl, alkenyl, alkynyl, heteroalkyl, aryl and heterocyclic; or
R¹ and R², together with the atoms to which they are bonded, form a ring comprising from 5 to 20 ring atoms.

## Patentansprüche

1. Sauerstoffbarrierezusammensetzung umfassend:
ein Polymer;
ein Metall;
und eine Verbindung, die die Struktur (II) aufweist 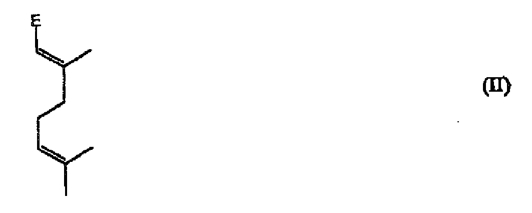 wobei -E ausgewählt wird aus der Gruppe bestehend aus -C(=O)H, -CH₂R¹ und -CHR¹R²;
wobei R¹ ist -O-R³-R⁴ oder -O-R⁴, so daß R¹ wenigstens 2 Kohlenstoffatome umfaßt und keine Carbonylgruppe enthält, und R³ und R⁴ werden unabhängig voneinander ausgewählt aus der Gruppe bestehend aus Alkyl, Alkenyl, Alkinyl, Heteroalkyl, Aryl und heterocyclische Verbindung;
R² ist -O-R⁵-R⁶ oder -O-R⁶, so daß R² wenigstens 2 Kohlenstoffatome umfaßt und keine Carbonylgruppe enthält, und R⁵ und R⁶ werden unabhängig voneinander ausgewählt aus der Gruppe bestehend aus Alkyl, Alkenyl, Alkinyl, Heteroalkyl, Aryl und heterocyclische Verbindung;
oder R¹ und R² bilden zusammen mit den Atomen, an die sie gebunden sind, einen Ring, der 5 bis 20 Ringatome aufweist.

2. Mehrphasige polymere Zusammensetzung umfassend:
eine erste Phase umfassend ein erstes Polymer; und
eine zweite Phase umfassend ein zweites Polymer, ein Metall, und eine Verbindung, die die Struktur (I) aufweist 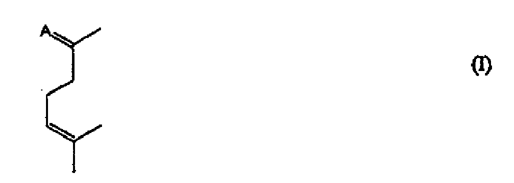 wobei =A ausgewählt wird aus der Gruppe bestehend aus einer Alkenylgruppe mit 3 bis 20 Kohlenstoffatomen, einer Cycloalkenylgruppe mit 5 bis 20 Kohlenstoffatomen und einer Gruppe, die die Struktur =CH-E aufweist;
wobei -E ausgewählt wird aus der Gruppe bestehend aus -CH₂OH, -CH(OH)₂, -C(=O)H, -CH"R¹ und -CHR¹R²;
wobei R¹ ist -O-R³-R⁴ oder -O-R⁴, wobei R³ und R⁴ keine Carbonylgruppe enthalten und unabhängig voneinander ausgewählt werden aus der Gruppe bestehend aus Alkyl, Alkenyl, Alkinyl, Heteroalkyl, Aryl und heterocyclische Verbindung;
R² ist -O-R⁵-R⁶ oder -O-R⁶, wo R⁵ und R⁶ keine Carbonylgruppe enthalten und unabhängig voneinander ausgewählt werden aus der Gruppe bestehend aus Alkyl, Alkenyl, Alkinyl, Heteroalkyl, Aryl und heterocyclische Verbindung; oder
R¹ und R² bilden zusammen mit den Atomen, an die sie gebunden sind, einen Ring, der 5 bis 20 Ringatome aufweist.

3. Zusammensetzung nach Anspruch 1, in der E ist -CHR¹(-O-R⁶) und R⁶ wird ausgewählt aus der Gruppe bestehend aus einer Alkylgruppe umfassend 2 bis 20 Kohlenstoffatome und eine Alkenylgruppe umfassend 2 bis 20 Atome.

4. Mehrphasige Zusammensetzung nach Anspruch 2, in der =A ist =CH-CHR¹(-O-R⁶), und R⁶ wird ausgewählt aus der Gruppe bestehend aus einer Alkylgruppe umfassend 2 bis 20 Kohlenstoffatome und eine Alkenylgruppe umfassend 2 bis 20 Atome.

5. Zusammensetzung nach einem der Ansprüche 3 und 4, in der R⁶ eine Alkenylgruppe ist, die 4 bis 20 Atome und wenigstens 2 Kohlenstoff-Kohlenstoff-Doppelbindungen aufweist .

6. Zusammensetzung nach Anspruch 1, in der -E ist -CHR(-O-R⁵-R⁶), und R⁵ wird ausgewählt aus der Gruppe bestehend aus einer Alkylgruppe, die 1 bis 20 Kohlenstoffatome aufweist, einer Alkenylgruppe, die 2 bis 20 Atome aufweist und einer Arylgruppe, die 5 bis 20 Kohlenstoffatome aufweist.

7. Mehrphasige Zusammensetzung nach Anspruch 2, in der =A ist =CH-CHR¹(-O-R⁵-R⁶), und R⁵ wird ausgewählt aus der Gruppe bestehend aus einer Alkylgruppe, die 1 bis 20 Kohlenstoffatome aufweist, einer Alkenylgruppe, die 2 bis 20 Atome aufweist und einer Arylgruppe, die 5 bis 20 Kohlenstoffatome aufweist.

8. Zusammensetzung nach einem der Ansprüche 6 und 7, in der R⁶ ausgewählt wird aus der Gruppe bestehend aus einer Alkygruppe, die 1 bis 20 Kohlenstoffatome aufweist, eine Alkenylgruppe, die 2 bis 20 Atome aufweist und einer Arylgruppe, die 5 bis 20 Kohlenstoffatome aufweist.

9. Zusammensetzung nach einem der Ansprüche 6 und 7, in der R⁵ eine Alkylgruppe umfassend 1 bis 20 Kohlenstoffatome ist und R⁶ eine Arylgruppe umfassend 5 bis 20 Kohlenstoffatome ist.

10. Zusammensetzung nach einem der Ansprüche 6 und 7, in der R⁵ eine Arylgruppe umfassend 5 bis 20 Kohlenstoffatome ist und R⁶ eine Arylgruppe umfassend 5 bis 20 Kohlenstoffatome ist.

11. Zusammensetzung nach Anspruch 1, in der -E ist -CH₂(-O-R⁴) und R⁴ ist ausgewählt aus der Gruppe bestehend aus einer Alkylgruppe, die 2 bis 20 Kohlenstoffatome aufweist und einer Alkenylgruppe, die 2 bis 20 Atome aufweist.

12. Mehrphasige Zusammensetzung nach Anspruch 2, in der =A ist =CH-CH₂(-O-R⁴) und R⁴ ist ausgewählt aus der Gruppe bestehend aus einer Alkylgruppe mit 2 bis 20 Kohlenstoffatomen und einer Alkenylgruppe umfassend 2 bis 20 Atome.

13. Zusammensetzung nach einem der Ansprüche 11 und 12, in der R⁴ eine Alkenylgruppe ist, die 4 bis 20 Kohlenstoffatome und wenigstens 2 Kohlenstoff-Kohlenstoff-Doppelbindungen aufweist.

14. Zusammensetzung nach Anspruch 1, in der -E ist -CH₂(-O-R³-R⁴), und R³ ist ausgewählt aus der Gruppe bestehend aus einer Alkylgruppe, die 1 bis 20 Kohlenstoffatome aufweist, einer Alkenylgruppe umfassend 2 bis 20 Atome und einer Arylgruppe umfassend 5 bis 10 Kohlenstoffatome.

15. Mehrphasige Zusammensetzung nach Anspruch 2, in der =A ist =CH-CH₂(-O-R³-R⁴), und R³ ist ausgewählt aus der Gruppe bestehend aus einer Alkylgruppe, die 1 bis 20 Kohlenstoffatome aufweist, einer Alkenylgruppe umfassend 2 bis 20 Atome und einer Arylgruppe umfassend 5 bis 20 Kohlenstoffatome.

16. Zusammensetzung nach einem der Ansprüche 14 und 15, in der R⁴ ausgewählt wird aus der Gruppe bestehend aus einer Alkylgruppe, die 1 bis 20 Kohlenstoffatome aufweist, eine Alkenylgruppe, die 2 bis 20 Atome aufweist und einer Arylgruppe, die 5 bis 20 Kohlenstoffatome aufweist.

17. Zusammensetzung nach einem der Ansprüche 14 und 15, in der R³ eine Alkylgruppe umfassend 1 bis 20 Kohlenstoffatome ist und R⁴ eine Arylgruppe umfassend 5 bis 20 Kohlenstoffatome ist.

18. Zusammensetzung nach einem der Ansprüche 13 und 14, in der R³ eine Arylgruppe umfassend 5 bis 20 Kohlenstoffatome ist und R⁴ eine Arylgruppe umfassend 5 bis 20 Kohlenstoffatome ist.

19. Zusammensetzung nach einem der Ansprüche 1 und 2, in der R¹ und R² zusammen mit den Atomen, an die sie gebunden sind, einen Ring ausgewählt aus der Gruppe bestehend aus Cycloalkyl, Cycloalkenyl, Aryl und heterocyclischer Verbindung bilden.

20. Zusammensetzung nach Anspruch 19, in der R¹ und R² zusammen 1 bis 5 Sauerstoffatome umfassen.

21. Zusammensetzung nach Anspruch 20, in der der R¹ und R² zusammen 2 bis 9 Kohlenstoffatome umfassen.

22. Zusammensetzung nach Anspruch 1, in der das Polymer ausgewählt wird aus der Gruppe bestehend aus einem Polyolefin, einem Polyacrylat, einem Polyester, einem chlorierten Polymer, einem Styrolpolymer, einem lonomer und einem Polycarbonat.

23. Zusammensetzung nach Anspruch 22, bei der das Polymer ein Polyolefin umfaßt, ausgewählt aus der Gruppe bestehend aus Polyethylen, Polypropylen, Poly(vinylalkohol) und deren Copolymere und deren Mischungen.

24. Zusammensetzung nach Anspruch 22, bei der das Polymer ein Polyacrylat umfaßt, ausgewählt aus der Gruppe bestehend aus Poly(methacrylat), Poly(methylmethacrylat), Poly(ethylacrylat), Poly(ethylmethacrylat und deren Copolymere und deren Mischungen.

25. Zusammensetzung nach Anspruch 22, bei der das Polymer ein chloriertes Polymer umfaßt, ausgewählt aus der Gruppe bestehend aus Poly(vinylchlorid), Poly(vinylidenchlorid) und deren Copolymere und deren Mischungen.

26. Zusammensetzung nach Anspruch 22, bei der das Polymer einen Polyester umfaßt, ausgewählt aus der Gruppe bestehend aus Poly(ethylenterephthalat), Poly(butylenterephthtalat), Poly(ethylennaphthalat), Poly(milchsäure), Poly(glykolsäure) und deren Copolymere und deren Mischungen.

27. Zusammensetzung nach einem der vorherigen Ansprüche, in der die Konzentration der Verbindung in der Zusammensetzung, wenn sie zu Anspruch 1 gehört, oder der zweiten Phase, wenn sie zu Anspruch 2 gehört, von 0,001 Gewichtsprozent bis 5 Gewichtsprozent reicht.

28. Zusammensetzung nach Anspruch 27, in der die Konzentration der Verbindung von 0,01 Gewichtsprozent bis 4 Gewichtsprozent reicht.

29. Zusammensetzung nach Anspruch 28, in der die Konzentration der Verbindung von 0,05 Gewichtsprozent bis 3 Gewichtsprozent reicht.

30. Zusammensetzung nach einem der vorherigen Ansprüche, in der das Metall ein Übergangsmetall umfaßt.

31. Zusammensetzung nach Anspruch 30, in der das Metall ausgewählt wird aus der Gruppe bestehend aus Eisen, Kobalt, Nickel, Rutherium, Rhodium, Palladium, Osmium, Iridium, Platin, Kupfer, Mangan und Zink.

32. Zusammensetzung nach Anspruch 31, in der das Metall Kobalt ist.

33. Zusammensetzung nach einem der Ansprüche 1 und 2, in der das Metall als ein Komplex vorhanden ist.

34. Zusammensetzung nach Anspruch 33, in der das Metall als ein Komplex vorhanden ist, der ausgewählt wird aus der Gruppe bestehend aus Kobalt(II)-2-ethylhexanoat, Kobalt(II)neodecanoat, Kobalt(II)acetat und Kobalt(II)oleat.

35. Zusammensetzung nach einem der vorherigen Ansprüche, in der eine Konzentration des Metalls in der Zusammensetzung, wenn sie zu Anspruch 1 gehört, oder der zweiten Phase, wenn sie zu Anspruch 2 gehört, von 30 Teilen pro Million bis 5000 Teilen pro Million reicht.

36. Zusammensetzung nach Anspruch 35, in der die Konzentration des Metalls von 200 Teilen pro Million bis 2500 Teilen pro Million reicht.

37. Zusammensetzung nach Anspruch 1, in der -E ist -CHR¹R², und R¹ und R² werden unabhängig voneinander ausgewählt aus der Gruppe bestehend aus -OCH₂CH₃; -OCH₂-C₆H₅; -OCH=C(CH₃)(CH₂)₂CH=C(CH₃)₂; -OC₆H₄-C(CH₃)₂-C₆H₅; und -OCH(CH=CH(CH₂)₇CH₃)-(OCH₂CH=C(CH₃)(CH₂)₂CH=C(CH₃)₂.

38. Zusammensetzung nach Anspruch 1, in der E ist -CH₂R¹, und R¹ wird ausgewählt aus der Gruppe bestehend aus -OCH₂CH₃; -OCH₂-C₆H₅; -OCH=C(CH₃)(CH₂)₂CH=C(CH₃)₂; -OC₆H₄-C(CH₃)₂-C₆H₅; und -OCH(CH=CH(CH₂)₇CH₃)-(OCH₂CH=C(CH₃)(CH₂)₂CH=C(CH₃)₂.

39. Zusammensetzung nach einem der Ansprüche 1 und 2, in der die Verbindung einen Bestandteil ausgewählt aus der Gruppe bestehend aus Citral, Citraldiethylacetal, Citraldigeranylacetal, Undecen-Aldehyddigeranylacetal, Citralethylenglycylacetal, Citraldiethylenglycylacetal, Citraldibenzylacetal und Citraldicumylphenylacetal.

40. Zusammensetzung nach einem der Ansprüche 1 und 2, in der Verbindung einen Bestandteil ausgewählt aus der Gruppe bestehend aus Citral, Citraldigeranylacetal, Citralethylenglycylacetal, Citraldiethylenglycylacetal, Citraldibenzylacetal und Citraldicumylphenylacetal umfaßt.

41. Mehrphasige Zusammensetzung nach Anspruch 26, in der =A eine Alkenylgruppe ist, die 3 bis 20 Kohlenstoffatome aufweist.

42. Mehrphasige Zusammensetzung nach Anspruch 41, in der =A eine Alkenylgruppe ist, die 4 bis 20 Kohlenstoffatome und wenigstens 2 Kohlenstoff-Kohlenstoff-Doppelbindungen aufweist.

43. Mehrphasige Zusammensetzung nach Anspruch 2, =A eine Cyclalkenylgruppe ist, die 5 bis 20 Kohlenstoffatome aufweist.

44. Mehrphasige Zusammensetzung nach Anspruch 26, in der =A ist =CH-CHR¹R², und R¹ und R² werden unabhängig voneinander ausgewählt aus der Gruppe bestehend aus -OCH₃; -OCH₂CH₃; -OCH₂-C₆H₅; -OC₆H₄-C(CH₃)₂-C₆H₅; -OCH(CH=CH(CH₂)₇CH₃)-(OCH₂CH=C(CH₃)(CH₂)₂CH=C(CH₃)₂ und -OCH=C(CH₃)(CH₂)₂CH=C(CH₃)₂.

45. Mehrphasige Zusammensetzung nach Anspruch 2, in der =A ist =CH-CH₂R¹, und R¹ wird ausgewählt aus der Gruppe bestehend aus -OCH₃; -OCH₂CH₃; -OCH₂-C₆H₅; -OCH(CH=CH(CH₂)₇CH₃)-(OCH₂CH=C(CH₃)(CH₂)₂CH=C(CH₃)₂ -OCH=C(CH₃)(CH₂)₂CH=C(CH₃)₂ und -OC₆H₄-C(CH₃)₂-C₆H₅;

46. Mehrphasige Zusammensetzung nach Anspruch 2, in der die Verbindung einen Bestandteil umfaßt, der ausgewählt wird aus der Gruppe bestehend aus Citral, Geraniol, Citraldimethylacetal, Citraldiethylacetal, Citraldigeranylacetal, Undecen-Aldehyddigeranylacetal, Citralethylenglycylacetal, Citraldiethylenglycylacetal, Citraldibenzylacetal, Citraldicumylphenylacetal, Farnesen und Bisabolen.

47. Mehrphasige Zusammensetzung nach Anspruch 2, in der zumindest eines der ersten und zweiten Polymere ausgewählt wird aus der Gruppe bestehend aus einem Polyolefin, einem Polyacrylat, einem Polyester, einem chlorierten Polymer, einem Styrolpolymer, einem Ionomer und einem Polycarbonat.

48. Mehrphasige Zusammensetzung nach Anspruch 47, in der zumindest eines der ersten und zweiten Polymere ein Polyolefin umfaßt, ausgewählt aus der Gruppe bestehend aus Polyethylen, Polypropylen, Poly(vinylalkohol) und deren Copolymere und deren Mischungen.

49. Mehrphasige Zusammensetzung nach Anspruch 47, in der zumindest eines der ersten und zweiten Polymere ein Polyacrylat umfaßt, ausgewählt aus der Gruppe bestehend aus Poly(methacrylat), Poly(methylmethacrylat), Poly(ethylacrylat), Poly(ethylmethacrylat und deren Copolymere und deren Mischungen.

50. Mehrphasige Zusammensetzung nach Anspruch 47, in der zumindest eines der ersten und zweiten Polymere ein chloriertes Polymer umfaßt, ausgewählt aus der Gruppe bestehend aus Poly(vinylchlorid), Poly(vinylidenchlorid) und deren Copolymere und deren Mischungen.

51. Mehrphasige Zusammensetzung nach Anspruch 47, in der zumindest eines der ersten und zweiten Polymere einen Polyester umfaßt, ausgewählt aus der Gruppe bestehend aus Poly(ethylenterephthalat), Poly(butylenterephthtalat), Poly(ethylennaphthalat), Poly(milchsäure), Poly(glykolsäure) und deren Copolymere und deren Mischungen.

52. Mehrphasige Zusammensetzung nach Anspruch 2, in der die mehrphasige Zusammensetzung eine Mischung ist und das erste Polymer verschieden von dem zweiten Polymer ist.

53. Mehrphasige Zusammensetzung nach Anspruch 52, in der die mehrphasige Zusammensetzung ausgewählt wird aus einer Verschlußabdichtung, einer Dichtungsmasse und einer Dichtung.

54. Mehrphasige Zusammensetzung nach Anspruch 2, in der die erste Phase und die zweite Phase als Schichten konfiguriert sind.

55. Wandung für eine Verpackung umfassend die Zusammensetzung nach Anspruch 2 oder irgendeinem der Ansprüche 22 bis 26, 31 bis 34, 39, 40 und 46 bis 51, in Abhängigkeit von Anspruch 2.

56. Wandung nach Anspruch 55, in der die erste Phase und die zweite Phase als eine Mischung vorhanden sind und das erste Polymer von dem zweiten Polymer verschieden ist.

57. Wandung nach Anspruch 55, in der die erste Phase und die zweite Phase als Schichten konfiguriert sind.

58. Wandung nach Anspruch 57, des weiteren umfassend eine dritte Phase umfassend ein drittes Polymer ausgewählt aus der Gruppe bestehend aus einem Polyolefin, einem Polyacrylat, einem Polyester, einem chlorierten Polymer, einem Styrolpolymer, einem Ionomer und einem Polycarbonat; wobei die erste, zweite und dritte Phase als Schichten konfiguriert sind.

59. Wandung nach Anspruch 58, des weiteren umfassend eine vierte Phase umfassend ein viertes Polymer ausgewählt aus der Gruppe bestehend aus einem Polyolefin, einem Polyacrylat, einem Polyester, einem chlorierten Polymer, einem Styrolpolymer, einem lonomer und einem Polycarbonat; wobei die erste, zweite, dritte und vierte Phase als Schichten konfiguriert sind.

60. Wandung nach Anspruch 59, des weiteren umfassend eine fünfte Phase umfassend ein fünftes Polymer ausgewählt aus der Gruppe bestehend aus einem Polyolefin, einem Polyacrylat, einem Polyester, einem chlorierten Polymer, einem Styrolpolymer, einem Ionomer und einem Polycarbonat; wobei die erste, zweite, dritte, vierte und fünfte Phase als Schichten konfiguriert sind.

61. Die Wandung nach Anspruch 57, des weiteren umfassend wenigstens eine adhäsive Schicht.

62. Die Wandung nach Anspruch 57, des weiteren umfassend eine Barriereschicht, die ein Barrierepolymer aufweist.

63. Die Wandung nach Anspruch 55, in der die Verpackung ausgewählt wird aus einer Flasche, einer Folie eines Materials, einem Beutel, einer Schale, einer Vorform, einer Abdichtung oder eines Teils eines Verschlusses.

64. Verfahren zur Herstellung einer Sauerstoffbarrierezusammensetzung, umfassend die Zusammensetzung nach Anspruch 1 oder irgendeinem der Ansprüche 22 bis 26, 34 und 39, wenn in Abhängigkeit von Anspruch 1, das Verfahren umfaßt die Kombination des Polymers, des Metalls und der Verbindung.

65. Verfahren nach Anspruch 64, bei dem die Kombination das Kombinieren des Metalls und der Verbindung mit dem Polymer in einem Extruder umfaßt.

66. Verfahren nach Anspruch 64, bei dem die Kombination das Mischen des Metalls, der Verbindung und des Polymers in einem Lösungsmittel, um eine flüssige Mischung zu bilden, und das Deponieren der flüssigen Mischung auf einem Substrat umfaßt.

67. Verfahren nach Anspruch 66, bei dem das Deponieren das Gießen der flüssigen Mischung und das Abdampfen des Lösungsmittels umfaßt.

68. Verfahren nach Anspruch 66, bei dem das Ablagern ein Sprayen umfaßt.

69. Verfahren nach Anspruch 64, bei dem die Verbindung mit dem Polymer in einer Konzentration von 0,001 Gewichtsprozent bis 5 Gewichtsprozent kombiniert wird.

70. Verfahren nach Anspruch 64, bei dem das Metall mit dem Polymer in einer Konzentration von 30 Teilen pro Million bis 5000 Teilen pro Million kombiniert wird.

71. Verfahren zur Herstellung einer Verpackung mit Sauerstoffbarriereeigenschaften umfassend:
Formen einer mehrphasigen Zusammensetzung nach Anspruch 1 oder irgendeinem der Ansprüche 27, 31, 34, 35, 39, 40 und 44 bis 46, wenn in Abhängigkeit von Anspruch 2.

72. Verfahren nach Anspruch 71, bei dem das Formen die Coextrusion des ersten Polymers und der zweiten Phase umfaßt.

73. Verfahren nach Anspruch 72, bei dem die mehrphasige Zusammensetzung eine Mischung ist.

74. Verfahren nach Anspruch 71, bei dem das Formen die Beschichtung einer Schicht der ersten Phase mit der zweiten Phase umfaßt.

75. Verfahren nach Anspruch 71, bei dem das Formen umfaßt
Formen einer zweiten Phasenschmelze durch Erhitzen des zweiten Polymers, des Metalls und der Verbindung;
Injektion einer Schmelze des ersten Polymers in eine Form; und
Injektion der zweiten Phasenschmelze in die Form, um eine mehrschichtige Struktur zu bilden.

76. Verfahren nach Anspruch 71, bei dem das Formen umfaßt
Formen einer ersten Polymerschmelze durch Erhitzen des ersten Polymers;
Formen einer zweiten Phasenschmelze durch Erhitzen des zweiten Polymers, des Metalls und der Verbindung; und
gleichzeitige Injektion der ersten Polymerschmelze und der zweiten Phasenschmelze in eine Form, um eine mehrschichtige Struktur zu bilden.

77. Verfahren nach einem der Ansprüche 75 und 76, bei dem die mehrschichtige Struktur eine Vorform umfaßt.

78. Verfahren nach Anspruch 77, bei dem die Verarbeitung umfaßt
Blasformen der Vorform in die Form eines Containers.

79. Verfahren nach Anspruch 75 des weiteren umfassend Injektion einer Schmelze eines dritten Polymers in die Form.

80. Verfahren nach Anspruch 76, bei dem mehrschichtige Struktur einen Vorformling umfaßt.

81. Verfahren nach Anspruch 80, bei dem die Verarbeitung umfaßt
Einschließen des Vorformling in eine Blasform und
Einblasen des Vorformlings in die Form der Blasform.

82. Verfahren nach Anspruch 71, bei dem die mehrphasige Zusammensetzung des weiteren eine dritte Phase umfaßt, die ein drittes Polymer aufweist, und das Formen umfaßt:
Formen einer ersten Polymerschmelze durch Erhitzen des ersten Polymers;
Formen einer zweiten Phasenschmelze durch Erhitzen des ersten Polymers, des Metalls und der Verbindung;
Formen einer dritten Polymerschmelze durch Erhitzen des dritten Polymers; und
gleichzeitige Injektion der ersten Polymerschmelze, der zweiten Phasenschmelze und der dritten Polymerschmelze in eine Form, um eine mehrschichtige Struktur zur bilden.

83. Verfahren nach Anspruch 82, bei dem die mehrphasige Zusammensetzung des weiteren umfaßt eine vierte Phase, die ein viertes Polymer aufweist, und das Formen umfaßt des weiteren das Formen einer vierten Polymerschmelze durch Erhitzen des vierten Polymers und gleichzeitige Injektion der vierten Polymerschmelze mit der ersten Polymerschmelze, der zweiten Phasenschmelze und der dritten Polymerschmelze in eine Form, um eine mehrschichtige Struktur zu bilden.

84. Verfahren nach Anspruch 71, bei dem die Verpackung ausgewählt wird aus einer Flasche, einer Folien eines Materials, einem Beutel und einer Schale.

85. Verfahren nach Anspruch 71, bei dem das erste Polymer und das zweite Polymer unabhängig voneinander ausgewählt werden aus der Gruppe bestehend aus einem Polyolefin, einem Polyacrylat, einem Polyester, einem chlorierten Polymer, einem Styrolpolymer, einem Ionomer und einem Polycarbonat.

86. Verfahren nach Anspruch 71, bei dem die mehrphasige Zusammensetzung die erste Phase und die zweite Phase umfaßt, die als Schichten konfiguriert sind, und des weiteren eine Schicht einer dritten Phase umfaßt.

87. Verfahren nach Anspruch 86, bei dem die mehrphasige Zusammensetzung des weiteren eine Schicht einer vierten Phase umfaßt.

88. Verfahren nach Anspruch 86, bei dem die mehrschichtige Struktur des weiteren mindestens eine adhäsive Schicht umfaßt.

89. Verfahren nach Anspruch 86, bei dem mehrschichtige Struktur des weiteren eine Barriereschicht umfaßt, die ein Barrierepolymer aufweist.

90. Verfahren zur Reduktion des Sauerstoffgehalts einer Substanz umfassend:
Abdichten der Substanz in einer Verpackung, die Verpackung umfaßt ein Polymer, ein Metall und eine Verbindung, die die Struktur (II) aufweist 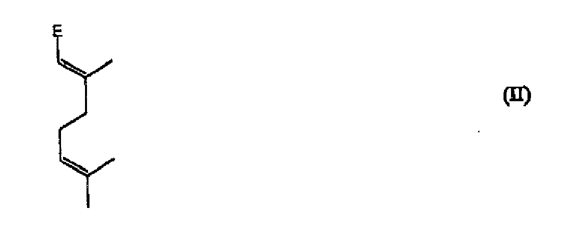 wobei -E ausgewählt wird aus der Gruppe bestehend aus -C(=O)H, -CH₂R¹ und -CHR¹R²;
wobei R¹ ist -O-R³-R⁴ oder -O-R⁴, so daß R¹ wenigstens 2 Kohlenstoffatome umfaßt und keine Carbonylgruppe enthält, und R³ und R⁴ werden unabhängig voneinander ausgewählt aus der Gruppe bestehend aus Alkyl, Alkenyl, Alkinyl, Heteroalkyl, Aryl und heterocyclische Verbindung;
R² ist -O-R⁵-R⁶ oder -O-R⁶, so daß R² wenigstens 2 Kohlenstoffatome umfaßt und keine Carbonylgruppe enthält, und R⁵ und R⁶ werden unabhängig voneinander ausgewählt aus der Gruppe bestehend aus Alkyl, Alkenyl, Alkinyl, Heteroalkyl, Aryl und heterocyclische Verbindung;
oder R¹ und R² bilden zusammen mit den Atomen, an die sie gebunden sind, einen Ring, der 5 bis 20 Ringatome aufweist.

## Revendications

1. Composition de barrière à l'oxygène, comprenant :
un polymère ;
un métal ;
et un composé répondant à la structure (II) 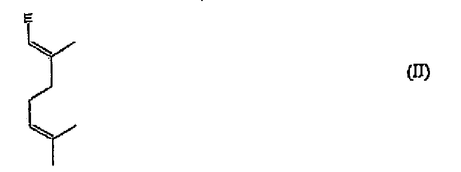 dans laquelle -E est choisi dans le groupe constitué par -C(=O)H, -CH₂R¹ et -CHR¹R² ;
où R¹ est -O-R³-R⁴ ou -O-R⁴, de telle sorte que R¹ comprenne au moins 2 atomes de carbone et ne contienne pas de groupe carbonyle, et R³ et R⁴ sont choisis indépendamment dans le groupe constitué par les groupes alkyle, alcényle, alcynyle, hétéroalkyle, aryle et hétérocyclique ;
R² est -O-R⁵-R⁶ ou -O-R⁶, de telle sorte que R² comprenne au moins 2 atomes de carbone et ne contienne pas de groupe carbonyle, et R⁵ et R⁶ sont choisis indépendamment dans le groupe constitué par les groupes alkyle, alcényle, alcynyle, hétéroalkyle, aryle et hétérocyclique ;
ou R¹ et R² forment ensemble, avec les atomes auxquels ils sont liés, un cycle comprenant de 5 à 20 atomes cycliques.

2. Composition polymère à plusieurs phases, comprenant :
une première phase comprenant un premier polymère ; et
une seconde phase, comprenant un second polymère, un métal et un composé répondant à la structure (I) 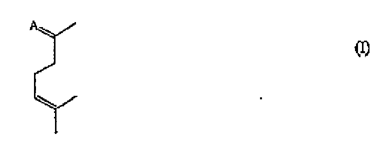 dans laquelle =A est choisi dans le groupe constitué par un groupe alcényle de 3 à 20 atomes de carbone, un groupe cycloalcényle de 5 à 20 atomes de carbone et un groupe répondant à la structure =CH-E ;
dans laquelle -E est choisi dans le groupe constitué par -CH₂OH, -CH (OH)₂, -C(=O)H, -CH₂R¹ et -CHR¹R² ;
où R¹ est -O-R³-R⁴ ou -O-R⁴, où R³ et R⁴ ne contiennent pas de groupe carbonyle et sont choisis indépendamment dans le groupe constitué par les groupes alkyle, alcényle, alcynyle, hétéroalkyle, aryle et hétérocyclique ;
R² est -O-R⁵-R⁶ ou -O-R⁶, où R⁵ et R⁶ ne contiennent pas de groupe carbonyle et sont choisis indépendamment dans le groupe constitué par les groupes alkyle, alcényle, alcynyle, hétéroalkyle, aryle et hétérocyclique ; ou
R¹ et R² forment ensemble, avec les atomes auxquels ils sont liés, un cycle comprenant de 5 à 20 atomes cycliques.

3. Composition selon la revendication 1, dans laquelle -E est -CHR¹(-O-R⁶), et R⁶ est choisi dans le groupe constitué par un groupe alkyle comprenant de 2 à 20 atomes de carbone et un groupe alcényle comprenant de 2 à 20 atomes.

4. Composition à plusieurs phases selon la revendication 2, dans laquelle =A est =CH-CHR¹(-O-R⁶), et R⁶ est choisi dans le groupe constitué par un groupe alkyle comprenant de 1 à 20 atomes de carbone et un groupe alcényle comprenant de 2 à 20 atomes.

5. Composition selon l'une quelconque des revendications 3 et 4, dans laquelle R⁶ est un groupe alcényle comprenant de 4 à 20 atomes de carbone et au moins 2 doubles liaisons carbone-carbone.

6. Composition selon la revendication 1, dans laquelle -E est -CHR(-O-R⁵-R⁶), et R⁵ est choisi dans le groupe constitué par un groupe alkyle comprenant de 1 à 20 atomes de carbone, un groupe alcényle comprenant de 2 à 20 atomes et un groupe aryle comprenant de 5 à 20 atomes de carbone.

7. Composition à plusieurs phases selon la revendication 2, dans laquelle =A est =CH-CHR¹(-O-R⁵-R⁶) , et R⁵ est choisi dans le groupe constitué par un groupe alkyle comprenant de 1 à 20 atomes de carbone, un groupe alcényle comprenant de 2 à 20 atomes et un groupe aryle comprenant de 5 à 20 atomes de carbone.

8. Composition selon l'une quelconque des revendications 6 et 7, dans laquelle R⁶ est choisi dans le groupe constitué par un groupe alkyle comprenant de 1 à 20 atomes de carbone, un groupe alcényle comprenant de 2 à 20 atomes et un groupe aryle comprenant de 5 à 20 atomes de carbone.

9. Composition selon l'une quelconque des revendications 6 et 7, dans laquelle R⁵ est un groupe alkyle comprenant de 1 à 20 atomes de carbone, et R⁶ est un groupe aryle comprenant de 5 à 20 atomes de carbone.

10. Composition selon l'une quelconque des revendications 6 et 7, dans laquelle R⁵ est un groupe aryle comprenant de 5 à 20 atomes de carbone, et R⁶ est un groupe aryle comprenant de 5 à 20 atomes de carbone.

11. Composition selon la revendication 1, dans laquelle -E est -CH₂(-C)-R⁴) et R⁴ est choisi dans le groupe constitué par un groupe alkyle comprenant de 2 à 20 atomes de carbone et un groupe alcényle comprenant de 2 à 20 atomes.

12. Composition à plusieurs phases selon la revendication 2, dans laquelle =A est =CH-CH₂(-OR⁴), et R⁴ est choisi dans le groupe constitué par un groupe alkyle comprenant de 1 à 20 atomes de carbone et un groupe alcényle comprenant de 2 à 20 atomes.

13. Composition selon l'une quelconque des revendications 11 et 12, dans laquelle R⁴ est un groupe alcényle comprenant de 4 à 20 atomes de carbone et au moins 2 doubles liaisons carbone-carbone.

14. Composition selon la revendication 1, dans laquelle -E est -CH₂(-O-R³-R⁴), et R³ est choisi dans le groupe constitué par un groupe alkyle comprenant de 1 à 20 atomes de carbone, un groupe alcényle comprenant de 2 à 20 atomes et un groupe aryle comprenant de 5 à 20 atomes de carbone.

15. Composition à plusieurs phases selon la revendication 2, dans laquelle =A est =CH-CH₂(-OR³-R⁴), et R³ est choisi dans le groupe constitué par un groupe alkyle comprenant de 1 à 20 atomes de carbone, un groupe alcényle comprenant de 2 à 20 atomes et un groupe aryle comprenant de 5 à 20 atomes de carbone.

16. Composition selon l'une quelconque des revendications 14 et 15, dans laquelle R⁴ est choisi dans le groupe constitué par un groupe alkyle comprenant de 1 à 20 atomes de carbone, un groupe alcényle comprenant de 2 à 20 atomes et un groupe aryle comprenant de 5 à 20 atomes de carbone.

17. Composition selon l'une quelconque des revendications 14 et 15, dans laquelle R³ est un groupe alkyle comprenant de 1 à 20 atomes de carbone, et R⁴ est un groupe aryle comprenant de 5 à 20 atomes de carbone.

18. Composition selon l'une quelconque des revendications 13 et 14, dans laquelle R³ est un groupe aryle comprenant de 5 à 20 atomes de carbone, et R⁴ est un groupe aryle comprenant de 5 à 20 atomes de carbone.

19. Composition selon l'une quelconque des revendications 1 et 2, dans laquelle R¹ et R² forment ensemble, avec les atomes auxquels ils sont liés, un cycle choisi dans le groupe constitué par les groupes cycloalkyle, cycloalcényle, aryle et hétérocyclique.

20. Composition selon la revendication 19, dans laquelle R¹ et R² comprennent conjointement de 1 à 5 atomes d'oxygène.

21. Composition salon la revendication 20, dans laquelle R¹ et R² comprennent conjointement de 2 à 9 atomes de carbone.

22. Composition selon la revendication 1, dans laquelle le polymère est choisi dans le groupe constitué par une polyoléfine, un polyacrylate, un polyester, un polymère chloré, un polymère styrénique, un ionomère et un polycarbonate.

23. Composition selon la revendication 22, dans laquelle le polymère comprend une polyoléfine choisie dans le groupe constitué par le polyéthylène, le polypropylène, le poly(alcool vinylique) et les copolymères et les mélanges de ceux-ci.

24. Composition selon la revendication 22, dans laquelle le polymère comprend un polyacrylate choisi dans le groupe constitué par le poly-(acrylate de méthyle), le poly(méthacrylate de méthyle), le poly(acrylate d'éthyle), le poly-(méthacrylate d'éthyle) et les copolymères et les mélanges de ceux-ci.

25. Composition selon la revendication 22, dans laquelle le polymère comprend un polymère chloré choisi dans le groupe constitué par le poly-(chlorure de vinyle), le poly(chlorure de vinylidène) et les copolymères et les mélanges de ceux-ci.

26. Composition selon la revendication 22, dans laquelle le polymère comprend un polyester choisi dans le groupe constitué par le poly(téréphtalate d'éthylène), le poly(téréphtalate de butylène), le poly(naphtalate d'éthylène), le poly(acide lactique), le poly(acide glycolique) et les copolymères et les mélanges de ceux-ci.

27. Composition selon l'une quelconque des revendications précédentes, dans laquelle la concentration du composé dans la composition lorsqu'elle dépend de la revendication 1 ou dans la seconde phase lorsqu'elle dépend de la revendication 2 est de 0,001 pour cent en poids à 5 pour cent en poids.

28. Composition selon la revendication 27, dans laquelle la concentration du composé est de 0,01 pour cent en poids à 4 pour cent en poids.

29. Composition selon la revendication 28, dans laquelle la concentration du composé est de 0,05 pour cent en poids à 3 pour cent en poids.

30. Composition selon l'une quelconque des revendications précédentes, dans laquelle le métal comprend un métal de transition.

31. Composition selon la revendication 30, dans laquelle le métal est choisi dans le groupe constitué par le fer, le cobalt, le nickel, le ruthénium, le rhodium, le palladium, l'osmium, l'iridium, le platine, le cuivre, le manganèse et le zinc.

32. Composition selon la revendication 31, dans laquelle le métal est le cobalt.

33. Composition selon l'une quelconque des revendications 1 et 2, dans laquelle le métal est présent sous forme d'un complexe.

34. Composition selon la revendication 33, dans laquelle le métal est présent sous forme d'un complexe choisi dans le groupe constitué par le 2-éthylhexanoate de cobalt (II), le néodécanoate de cobalt (II), l'acétate de cobalt (II) et l'oléate de cobalt (II).

35. Composition selon l'une quelconque des revendications précédentes, dans laquelle la concentration du métal dans la composition lorsqu'elle dépend de la revendication 1, ou dans la seconde phase lorsqu'elle dépend de la revendication 2, est de 30 parties par million à 5 000 parties par million.

36. Composition selon la revendication 35, dans laquelle la concentration du métal est de 200 parties par million à 2 500 parties par million.

37. Composition selon la revendication 1, dans laquelle -E est -CHR¹R², et R¹ et R² sont choisis indépendamment dans le groupe constitué par -OCH₂CH₃ ; -OCH₂-C₆H₅ ; -OCH=C(CH₃) (CH₂) ₂CH=C (CH₃) ₂ ; -OC₆H₄-C(CH₃)₂-C₆H₅ ; et -OCH(CH=CH(CH₂)₇CH₃)-₍OCH₂-CH= (CH₃) (CH₂) ₂CH=C (CH₃)₂ .

38. Composition selon la revendication 1, dans laquelle -E est -CH₂R¹, et R¹ est choisi dans le groupe constitué par -OCH₂CH₃ ; -OCH₂-C₆H_{5 ;} -OCH=C(CH₃)-(CH₂)₂CH=C(CH₃)₂ ; -OC₆H₄-C(CH₃)₂-C₆H₅ ; et -OCH - (CH=CH (CH₂) ₇CH₃) - (OCH₂CH=C (CH₃) (CH₂)₂CH=C-(CH₃)₂.

39. Composition selon l'une quelconque des revendications 1 et 2, dans laquelle le composé comprend un élément choisi dans le groupe constitué par le citral, le diéthylacétal du citral, le digéranylacétal du citral, le digéranylacétal de l'aldéhyde undécylénique, l'éthylèneglycylacétal du citral, le diéthylèneglycylacétal du citral, le dibenzylacétal du citral, et le dicumylphénylacétal du citral.

40. Composition selon l'une quelconque des revendications 1 et 2, dans laquelle le composé comprend un élément choisi dans le groupe constitué par le citral, le digéranylacétal du citral, l'éthyléneglycylacétal du citral, le diéthylèneglycylacétal du citral, le dibenzylacétal du citral, et le dicumylphénylacétal du citral.

41. Composition à plusieurs phases selon la revendication 26, dans laquelle =A est un groupe alcényle comprenant de 3 à 20 atomes de carbone.

42. Composition à plusieurs phases selon la revendication 41, dans laquelle =A est un groupe alcényle comprenant de 4 à 20 atomes de carbone et au moins 2 doubles liaisons carbone-carbone.

43. Composition à plusieurs phases selon la revendication 2, dans laquelle =A est un groupe cycloalcényle comprenant de 5 à 20 atomes de carbone.

44. Composition à plusieurs phases selon la revendication 26, dans laquelle =A est =CH-CHR¹R², et R¹ et R² sont choisis indépendamment dans le groupe constitué par -O-CH₃ ; -OCH₂CH₃ ; -OCH₂-C₆H₅ ; -OC₆H₄-C(CH₃)₂-C₆H₅ ; -OCH(CH=CH(CH₂)₇CH₃)-(OCH₂-CH=C(CH₃)(CH₂)₂-CH=C(CH₃)₂ et -OCH=C(CH₃)-(CH₂)₂CH=C(CH₃)₂.

45. Composition à plusieurs phases selon la revendication 2, dans laquelle =A est =CH-CH₂R¹, et R¹ est choisi dans le groupe constitué par -O-CH₃ ; -OCH₂CH₃ ; -OCH₂-C₆H₅ ; -OCH=C(CH₃)-(CH₂)₂-CH=C(CH₃)₂ ; -OCH(CH-CH(CH₂)₇CH₃)-(OCH₂)-CH=C(CH₃)-(CH₂)₂-CH=C(CH₃)₂ et -OC₆H₄-C(CH₃)₂-C₆H₅.

46. Composition à plusieurs phases selon la revendication 2, dans laquelle le composé comprend un élément choisi dans le groupe constitué par le citral, le géraniol, le diméthylacétal du citral, le diéthylacétal du citral, le digéranylacétal du citral, le digéranylacétal de l'aldéhyde undécylénique, l'éthylèneglycylacétal du citral, le diéthylèneglycylacétal du citral, le dibenzylacétal du citral, le dicumylphénylacétal du citral, le farnesène et le bisabolène.

47. Composition à plusieurs phases selon la revendication 2, dans laquelle l'un au moins des premier et second polymères est choisi dans le groupe constitué par une polyoléfine, un polyacrylate, un polyester, un polymère chloré, un polymère styrénique, un ionomère et un polycarbonate.

48. Composition à plusieurs phases selon la revendication 47, dans laquelle l'un au moins des premier et second polymères comprend une polyoléfine choisie dans le groupe constitué par le polyéthylène, le polypropylène, le poly(alcool vinylique) et les copolymères et les mélanges de ceux-ci.

49. Composition à plusieurs phases selon la revendication 47, dans laquelle l'un au moins des premier et second polymères comprend un polyacrylate choisi dans le groupe constitué par le poly(acrylate de méthyle), le poly(méthacrylate de méthyle), le poly(acrylate d'éthyle), le poly-(méthacrylate d'éthyle) et les copolymères et les mélanges de ceux-ci.

50. Composition à plusieurs phases selon la revendication 47, dans laquelle l'un au moins des premier et second polymères comprend un polymère chloré choisi dans le groupe constitué par le poly(chlorure de vinyle), le poly(chlorure de vinylidène) et les copolymères et les mélanges de ceux-ci.

51. Composition à plusieurs phases selon la revendication 47, dans laquelle l'un au moins des premier et second polymères comprend un polyester choisi dans le groupe constitué par le poly-(téréphtalate d'éthylène), le poly(téréphtalate de butylène), le poly(naphtalate d'éthylène), le poly(acide lactique), le poly(acide glycolique) et les copolymères et les mélanges de ceux-ci.

52. Composition à plusieurs phases selon la revendication 2, dans laquelle la composition à plusieurs phases est un mélange et le premier polymère est différent du second polymère.

53. Composition à plusieurs phases selon la revendication 52, dans laquelle la composition à plusieurs phases est choisie parmi un capsulage, une pochette, un produit d'étanchéité et un joint statique.

54. Composition à plusieurs phases selon la revendication 2, dans laquelle la première phase et la seconde phase sont configurées sous forme de couches.

55. Paroi pour un emballage, comprenant la composition selon la revendication 2 ou selon l'une quelconque des revendications 22 à 26, 31 à 34, 39, 40 et 46 à 51 lorsqu'elle dépend de la revendication 2.

56. Paroi selon la revendication 55, dans laquelle la première phase et la seconde phase sont présentes sous forme d'un mélange, et le premier polymère est différent du second polymère.

57. Paroi selon la revendication 55, dans laquelle la première phase et la seconde phase sont configurées sous forme de couches.

58. Paroi selon la revendication 57, comprenant en outre une troisième phase comprenant un troisième polymère choisi dans le groupe constitué par une polyoléfine, un polyacrylate, un polyester, un polymère chloré, un polymère styrénique, un ionomère et un polycarbonate ; et dans laquelle les première, deuxième et troisième phases sont configurées sous forme de couches.

59. Paroi selon la revendication 58, comprenant en outre une quatrième phase comprenant un quatrième polymère choisi dans le groupe constitué par une polyoléfine, un polyacrylate, un polyester, un polymère chloré, un polymère styrénique, un ionomère et un polycarbonate ; et dans laquelle les première, deuxième, troisième et quatrième phases sont configurées sous forme de couches.

60. Paroi selon la revendication 59, comprenant en outre une cinquième phase comprenant un cinquième polymère choisi dans le groupe constitué par une polyoléfine, un polyacrylate, un polyester, un polymère chloré, un polymère styrénique, un ionomère et un polycarbonate ; et dans laquelle les première, deuxième, troisième, quatrième et cinquième phases sont configurées sous forme de couches.

61. Paroi selon la revendication 57, comprenant en outre au moins une couche adhésive.

62. Paroi selon la revendication 57, comprenant en outre une couche de barrière comprenant un polymère de barrière.

63. Paroi selon la revendication 55, dans laquelle l'emballage est choisi parmi une bouteille, une feuille d'un matériau, un sac, un plateau, un préformé, une pochette ou une partie de capsulage.

64. Méthode de fabrication d'une composition de barrière à l'oxygène, comprenant la composition selon la revendication ou selon l'une quelconque des revendications 22 à 26, 34 et 39 lorsqu'elle dépend de la revendication 1, la méthode comprenant la combinaison du polymère, du métal et du composé.

65. Méthode selon la revendication 64, dans laquelle la combinaison comprend la combinaison du métal et du composé avec le polymère dans une extrudeuse.

66. Méthode selon la revendication 64, dans laquelle la combinaison comprend le mélange du métal, du composé et du polymère dans un solvant pour former un mélange liquide, et le dépôt du mélange liquide sur un substrat.

67. Méthode selon la revendication 66, dans laquelle le dépôt comprend la coulée du mélange liquide et l'évaporation du solvant.

68. Méthode selon la revendication 66, dans laquelle le dépôt comprend une pulvérisation.

69. Méthode selon la revendication 64, dans laquelle le composé est combiné avec le polymère dans une concentration de 0,001 pour cent en poids à 5 pour cent en poids.

70. Méthode selon la revendication 64, dans laquelle le métal est combiné avec le polymère dans une concentration de 30 parties par million à 5 000 parties par million.

71. Méthode de fabrication d'un emballage présentant des propriétés de barrière à l'oxygène, comprenant :
la formation d'une composition à plusieurs phases selon la revendication 1 ou selon l'une quelconque des revendications 27, 31, 34, 35, 39, 40 et 44 à 46, lorsqu'elle dépend de la revendication 2.

72. Méthode selon la revendication 71, dans laquelle la formation comprend l'extrusion conjointe du premier polymère et de la seconde phase.

73. Méthode selon la revendication 72, dans laquelle la composition à plusieurs phases est un mélange.

74. Méthode selon la revendication 71, dans laquelle la formation comprend l'application d'une couche de la première phase avec la seconde phase.

75. Méthode selon la revendication 71, dans laquelle la formation comprend la formation d'une masse en fusion de la seconde phase par chauffage du second polymère, du métal et du composé ;
l'injection d'une masse en fusion du premier polymère dans un moule ; et
l'injection de la masse en fusion de la seconde phase dans le moule pour former une structure à plusieurs couches.

76. Méthode selon la revendication 71, dans laquelle la formation comprend la formation d'une masse en fusion du premier polymère par chauffage du premier polymère ; la formation d'une masse en fusion de la seconde phase par chauffage du second polymère, du métal et du composé ; et l'injection simultanée de la masse en fusion du premier polymère et de la masse en fusion de la seconde phase dans un moule pour former une structure à plusieurs couches.

77. Méthode selon l'une quelconque des revendications 75 et 76, dans laquelle la structure à plusieurs couches comprend un préformé.

78. Méthode selon la revendication 77, dans laquelle le traitement comprend un moulage par soufflage du préformé sous la forme d'un récipient.

79. Méthode selon la revendication 75, comprenant en outre l'injection d'une masse en fusion d'un troisième polymère dans le moule.

80. Méthode selon la revendication 76, dans laquelle la structure à plusieurs couches comprend une paraison.

81. Méthode selon la revendication 80, dans 5 laquelle le traitement comprend l'insertion de la paraison dans un moule de soufflage et la dilatation de la paraison sous la forme du moule de soufflage.

82. Méthode selon la revendication 71, dans laquelle la composition à plusieurs phases comprend en outre une troisième phase comprenant un troisième polymère, et la formation comprend :
• la formation d'une masse en fusion du premier polymère par chauffage du premier polymère ;
• la formation d'une masse en fusion de la deuxième phase par chauffage du deuxième polymère, du métal et du composé ;
• la formation d'une masse en fusion du troisième polymère par chauffage du troisième polymère ; et
• l'injection simultanée de la masse en fusion du premier polymère, de la masse en fusion de la deuxième phase et de la masse en fusion du troisième polymère dans un moule pour former une structure à plusieurs couches.

83. Méthode selon la revendication 82, dans laquelle la composition à plusieurs phases comprend en outre une quatrième phase comprenant un quatrième polymère, et la formation comprend en outre la formation d'une masse en fusion du quatrième polymère par chauffage du quatrième polymère, et l'injection simultanée de la masse en fusion du quatrième polymère avec la masse en fusion du premier polymère, la masse en fusion de la deuxième phase et la masse en fusion du troisième polymère dans un moule pour former une structure à plusieurs couches.

84. Méthode selon la revendication 71, dans laquelle l'emballage est choisi parmi une bouteille, une feuille d'un matériau, un sac et un plateau.

85. Méthode selon la revendication 71, dans laquelle le premier polymère et le second polymère sont choisis indépendamment dans le groupe constitué par une polyoléfine, un polyacrylate, un polyester, un polymère chloré, un polymère styrénique, un ionomère et un polycarbonate.

86. Méthode selon la revendication 71, dans laquelle la composition à plusieurs phases comprend la première phase et la seconde phase configurées sous forme de couches, et comprend en outre une couche d'une troisième phase.

87. Méthode selon la revendication 86, dans laquelle la composition à plusieurs phases comprend en outre une couche d'une quatrième phase.

88. Méthode selon la revendication 86, dans laquelle la structure à plusieurs couches comprend en outre au moins une couche adhésive.

89. Méthode selon la revendication 86, dans laquelle la structure à plusieurs couches comprend en outre une couche de barrière comprenant un polymère de barrière.

90. Méthode de réduction de la teneur en oxygène d'une substance, comprenant : la fermeture hermétique de la substance dans un emballage, l'emballage comprenant un polymère, un métal et un composé répondant à la structure (II) 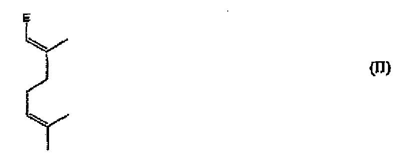 dans laquelle -E est choisi dans le groupe constitué par -C(=O)H, -CH₂R¹ et -CHR¹R² ;
où R¹ est -O-R³-R⁴ ou -O-R⁴, de telle sorte que R¹ comprenne au moins 2 atomes de carbone et ne contienne pas de groupe carbonyle, et R³ et R⁴ sont choisis indépendamment dans le groupe constitué par les groupes alkyle, alcényle, alcynyle, hétéroalkyle, aryle et hétérocyclique ;
R² est -O-R⁵-R⁶ ou -O-R⁶, de telle sorte que R² comprenne au moins 2 atomes de carbone et ne contienne pas de groupe carbonyle, et R⁵ et R⁶ sont choisis indépendamment dans le groupe constitué par les groupes alkyle, alcényle, alcynyle, hétéroalkyle, aryle et hétérocyclique ; ou
R¹ et R² forment ensemble, avec les atomes auxquels ils sont liés, un cycle comprenant de 5 à 20 atomes cycliques.
